# EUROPEAN PATENT SPECIFICATION

(11) **EP 3 696 901 B1**
(45) Date of publication and mention of the grant of the patent: **26.03.2025**
(21) Application number: 20156563.7
(22) Date of filing: 11.02.2020
(51) Int. Cl.: H01M 10/0567, H01M 10/0525, H01M 4/525, H01M 4/02, H01M 4/36, H01M 4/38, H01M 4/587, H01M 10/0568, H01M 10/0569

(54) **LITHIUM SECONDARY BATTERY**
LITHIUMSEKUNDÄRBATTERIE
BATTERIE SECONDAIRE AU LITHIUM

(30) Priority: 12.02.2019 KR 20190016355
(43) Date of publication of application: 19.08.2020
(73) Proprietor: Samsung SDI Co., Ltd., Gyeonggi-do 17084 (KR); Samsung Electronics Co., Ltd., Gyeonggi-do 16677 (KR)
(72) Inventor: PARK, Insun, Gyeonggi-do 16678 (KR); KOH, Myongchun, Gyeonggi-do 16678 (KR); KIM, Dongyoung, Gyeonggi-do 17084 (KR); KANG, Yoonsok, Gyeonggi-do 17084 (KR); SEO, Jinah, Gyeonggi-do 17084 (KR)
(74) Representative: Elkington and Fife LLP

(56) References cited:
- EP-A1- 3 396 769
- WO-A1-2009/022848
- CN-A- 105 609 877
- CN-A- 107 946 643
- US-A1- 2013 330 609

## Description

### FIELD OF THE INVENTION

The present disclosure relates to a lithium battery.

### BACKGROUND OF THE INVENTION

Lithium batteries are used as power sources for driving portable electronic appliances such as video cameras, mobile phones, and notebook computers. Rechargeable lithium secondary batteries have three times higher energy density per unit weight than conventional lead batteries, nickel-cadmium batteries, nickel metal hydride batteries, and nickel-zinc batteries, and may be charged at high speed.

To manufacture a lithium second battery having high energy density, a cathode active material providing an increased discharge capacity is used. A cathode active material having an increased discharge capacity has relatively low electrochemical stability. Therefore, a side reaction of a cathode active material and an electrolyte occurs during a charge-discharge process of a lithium secondary battery, and thus stability of the lithium secondary battery deteriorates. Therefore, there is a need for a method of improving the stability of a lithium secondary battery including a cathode active material that provides an increased discharge capacity.

EP 3 396 769 A1 describes an electrolyte solution for lithium secondary battery, comprising an electrolyte salt, an organic solvent, and a linear sulfonic acid ester additive having a terminal alkynyl group in the alcohol part and a 4-isocyanatophenyl group in the acid part. This electrolyte solution is employed in a lithium secondary battery having LiNi _{0.6}Mn_{0.2}Co_{0.2}O₂ as cathode active material and natural graphite as anode active material. CN 107 946 643 A, CN 105 609 877 A, US 2013/330609 A1 and WO 2009/022848 A1 also refer to the use of unsaturated linear sulfonate compounds as additive for a battery electrolyte.

### SUMMARY OF THE INVENTION

Provided is a lithium battery as defined in the appended claims.

Additional aspects will be set forth in part in the description which follows and, in part, will be apparent from the description, or may be learned by practice of the presented embodiments.

According to an aspect of an embodiment, a lithium battery includes: a cathode; an anode; and an electrolyte between the cathode and the anode, wherein the cathode includes a cathode active material represented by Formula 1, and the electrolyte includes a lithium salt, a non-aqueous solvent, and an unsaturated compound represented by Formula 2:

<Formula 1> LiₓNi_{y}M_{1-y}O_{2-z}A_{z}

wherein, in Formula 1, 0.9≤x≤1.2, 0.7≤y≤0.98, and 0≤z<0.2 are satisfied,
M is at least one element selected from Al, Mg, Mn, Co, Fe, Cr, V, Ti, Cu, B, Ca, Zn, Zr, Nb, Mo, Sr, Sb, W, and Bi, and
A is an element having an oxidation number of -1 or -2; 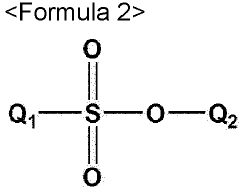
wherein, in Formula 2, one of Q₁ and Q₂ is a group represented by - (L₁)-(R₁), and the other of Q₁ and Q₂ is a group represented by -(L₂)-(R₂),
L₁ is selected from a substituted or unsubstituted C₂-C₂₀ alkenylene group and a substituted or unsubstituted C₂-C₂₀ alkynylene group,
L₂ is a substituted or unsubstituted C₆-C₆₀ arylene group, and
R₁ and R₂ are each independently selected from hydrogen, a substituted or unsubstituted linear or branched C₁-C₃₀ alkyl group, and a substituted or unsubstituted C₆-C₆₀ aryl group,
wherein the substituent(s) of the substituted C2-C20 alkenylene group, substituted C2-C20 alkynylene group, substituted C6-C60 arylene group, substituted linear or branched C1-C30 alkyl group and substituted C6-C60 aryl group is selected from a halogen atom, a C1-C20 alkyl group substituted with a halogen atom, a C1-C20 alkoxy group, a C2-C20 alkoxyalkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid group or a salt thereof, a phosphoric acid group or a salt thereof, a C1-C20 alkyl group, a C2-C20 alkenyl group, a C2-C20 alkynyl group , a C1-C20 heteroalkyl group, a C6-C20 aryl group, a C6-C20 arylalkyl group, a C6-C20 heteroaryl group, a C7-C20 heteroarylalkyl group, a C6-C20 heteroaryloxy group, a C6-C20 heteroaryloxyalkyl group, or a C6-C20 heteroarylalkyl group.

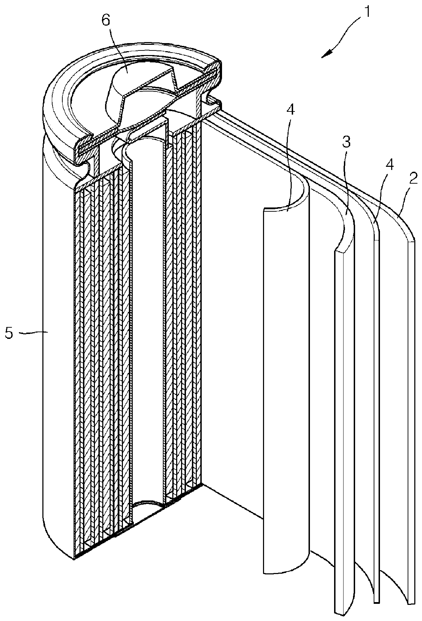

### BRIEF DESCRIPTION OF THE DRAWING

These and/or other aspects will become apparent and more readily appreciated from the following description of the embodiments, taken in conjunction with FIGURE which is a schematic view of a lithium battery according to an example embodiment.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, an organic electrolyte for lithium batteries and a lithium battery employing the organic electrolyte according to example embodiments will be described in more detail.

A lithium battery according to an embodiment includes: a cathode; an anode; and an electrolyte between the cathode and the anode, wherein the cathode includes a cathode active material represented by Formula 1, and the electrolyte includes a lithium salt, a non-aqueous solvent, and an unsaturated compound represented by Formula 2:

<Formula 1> LiₓNi_{y}M_{1-y}O_{2-z}A_{z}

wherein, in Formula 1, 0.9≤x≤1.2, 0.7≤y≤0.98, and 0≤z<0.2 are satisfied,
M is at least one element selected from Al, Mg, Mn, Co, Fe, Cr, V, Ti, Cu, B, Ca, Zn, Zr, Nb, Mo, Sr, Sb, W, and Bi, and
A is an element having an oxidation number of -1 or -2; 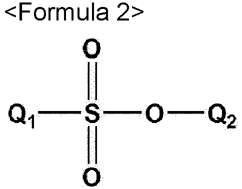
wherein, in Formula 2, one of Q₁ and Q₂ is a group represented by - (L₁)-(R₁), and the other of Q₁ and Q₂ is a group represented by -(L₂)-(R₂),
L₁ is selected from a substituted or unsubstituted C₂-C₂₀ alkenylene group and a substituted or unsubstituted C₂-C₂₀ alkynylene group,

L₂ is a substituted or unsubstituted C₆-C₆₀ arylene group, and
R₁ and R₂ are each independently selected from hydrogen, a substituted or unsubstituted linear or branched alkyl group, and a substituted or unsubstituted C₆-C₆₀ aryl group,
wherein the substituent(s) of the substituted C2-C20 alkenylene group, substituted C2-C20 alkynylene group, substituted C6-C60 arylene group, substituted linear or branched C1-C30 alkyl group and substituted C6-C60 aryl group is selected from a halogen atom, a C1-C20 alkyl group substituted with a halogen atom, a C1-C20 alkoxy group, a C2-C20 alkoxyalkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid group or a salt thereof, a phosphoric acid group or a salt thereof, a C1-C20 alkyl group, a C2-C20 alkenyl group, a C2-C20 alkynyl group , a C1-C20 heteroalkyl group, a C6-C20 aryl group, a C6-C20 arylalkyl group, a C6-C20 heteroaryl group, a C7-C20 heteroarylalkyl group, a C6-C20 heteroaryloxy group, a C6-C20 heteroaryloxyalkyl group, or a C6-C20 heteroarylalkyl group.

In the case of a lithium metal composite oxide having a high Ni content like the cathode active material represented by Formula 1, a high-power and high-capacity battery is realized, but Ni cations contained in the lithium metal composite oxide are eluted from the cathode into the electrolyte to cause the deterioration of the cathode, and the metal cations react with a passivation film (solid electrolyte interphase (SEI) film) of the anode to decompose the SEI film to expose a part of the anode active material to the electrolyte to cause a side reaction, thereby deteriorating capacity characteristics and lifetime characteristics and increasing the gas generation amount due to the side reaction.

For overcoming these phenomena, the lithium battery includes an electrolyte including the unsaturated compound represented by Formula 2, and thus the side reaction caused by Ni cations is minimized, thereby reducing the generation of gas to improve the lifetime of the lithium battery.

In detail, the unsaturated compound has high affinity with Ni cations, and thus there is an effect of suppressing the side reaction caused by Ni cations. In particular, even when the lithium battery is driven under a high voltage, the unsaturated compound maintains high affinity with Ni cations, and thus there is an effect of suppressing the decomposition of the SEI film. Further, the unsaturated compound, which is a material reduced and decomposed at a metal anode prior to a solvent, may form a more stable SEI film on the surface of the anode. The SEI film formed on the surface of the anode reduces the generation of gas due to a side reaction, thereby improving the electrochemical characteristics of the lithium battery. Consequently, the unsaturated compound improves the stability of the SEI film, thereby reducing the gas generation of a lithium secondary battery and improving the performance of the lithium battery.

In this case, the amount of the unsaturated compound in the electrolyte may be 5 parts by weight or less per 100 parts by weight of the electrolyte, but is not limited thereto. The amount thereof may not be limited as long as Ni cations eluted from the cathode active material into the electrolyte are stabilized and a protective film is easily formed on the surface of the anode by the unsaturated compound. When the amount of the unsaturated compound is more than 5 parts by weight, the unsaturated compound itself may be greatly decomposed to increase coating resistance, and the produced CO₂ may make a negative influence to deteriorate battery capacity, storage stability and cycle characteristics.

According to an embodiment, the amount of the unsaturated compound may be about 0.005 parts by weight to about 5 parts by weight per 100 parts by weight of the electrolyte. For example, the amount of the unsaturated compound may be about 0.01 parts by weight to about 2 parts by weight or about 0.1 parts by weight to about 1.5 parts by weight per 100 parts by weight of the electrolyte.

When the amount of the unsaturated compound is less than 0.005 parts by weight per 100 parts by weight of the electrolyte, the amount thereof is too small, so that the protective film may not be formed, and it may be difficult to obtain a sufficient resistance reduction effect.

According to an embodiment, the L₁ may be selected from C₂-C₂₀ aliphatic hydrocarbon groups each including a double bond such as an ethenylene group, a propenylene group, an isobutenylene group, a sec-butenylene group, a ter-butenylene group, a pentenylene group, a 2-pentenylene group, a 3-pentenylene group, a 2,2- dimethylpropenylene group, a 2-methylbutenylene group, a 2-methyl-2-butenylene group, a 3-methylbutenylene group, a 3-methyl-2-butenylene group, a hexenylene group, a 2-hexenylene group, a 3-hexenylene group, a 2-methylpentenylene group, a 2-methyl-2-pentenylene group, a 2-methyl-3-pentenylene group, a 3-methylpentenylene group, a 3-methyl-2-pentenylene group, a 3-methyl-3-pentenylene group, a 4-methylpentenylene group, a 4-methyl-2-pentenylene group, a 3-dimethyl-2-butenylene group, a 3,3-dimethylbutenylene group, a 3,3-dimethyl-2-butenylene group, and a 2-ethylbutenylene group; and C₂-C₂₀ aliphatic hydrocarbon groups each including a triple bond such as an ethynylene group, a propynylene group, an isobutynylene group, a sec-butynylene group, a ter-butynylene group, a pentynylene group, a 2-pentynylene group, a 3-pentynylene) group, a 2,2- dimethylpropynylene group, a 2-methylbutynylene group, a 2-methyl-2-butynylene group, a 3-methylbutynylene group, a 3-methyl-2-butynylene group, a hexenylyne group, a 2-hexenylyne group, a 3-hexenylyne group, a 2-methylpentynylene group, a 2-methyl-2-pentynylene group, a 2-methyl-3-pentynylene group, a 3-methylpentynylene group, a 3-methyl-2-pentynylene group, a 3-methyl-3-pentynylene group, a 4-methylpentynylene group, a 4-methyl-2-pentynylene group, a 3-dimethyl-2-butynylene group, a 3,3-dimethylbutynylene group, a 3,3-dimethyl-2-butynylene group, and a 2-ethylbutynylene group.

According to an embodiment, the L₂ may be selected from:
a phenylene group, a naphthylene group, a fluorenylene group, a spiro-bifluorenylene group, a benzofluorenylene group, a dibenzofluorenylene group, a phenanthrenylene group, and an anthracenylene group; and
a phenylene group, a naphthylene group, a fluorenylene group, a spiro-bifluorenylene group, a benzofluorenylene group, a dibenzofluorenylene group, a phenanthrenylene group, and an anthracenylene group, each substituted with at least one selected from deuterium, -F, -Cl, -Br, -I, a hydroxyl group, a cyano group, a nitro group, an amidino group, a hydrazino group, a hydrazino group, a alkyl group, a alkoxy group, a cyclopentyl group, a cyclohexyl group, a cyclohexenyl group, a phenyl group, a biphenyl group, a terphenyl group, and a naphthyl group.

For example, L₂ may be a phenylene group or a naphthylene group.

According to an embodiment, R₁ and R₂ may each independently be selected from a substituted or unsubstituted linear or branched alkyl group and a substituted or unsubstituted C₆-C₆₀ aryl group.

According to another embodiment, R₁ and R₂ may each independently be selected from:
a phenyl group, a naphthyl group, an anthracenyl group, a biphenyl group, and a terphenyl group; and
a phenyl group, a naphthyl group, an anthracenyl group, a biphenyl group, and a terphenyl group, each substituted with at least one selected from a methyl group, an ethyl group, a propyl group, an isopropyl group, a butyl group, a sec-butyl group, a tert-butyl group, and an isobutyl group.

Examples of the alkyl group may include, but are not limited to, a methyl group, an ethyl group, a propyl group, an isopropyl group, a butyl group, a sec-butyl group, a tert-butyl group, and an isobutyl group.

Examples of the C₆-C₆₀ aryl group may include, but are not limited to, a phenyl group, a naphthyl group, a biphenyl group, and a terphenyl group.

According to an embodiment, the unsaturated compound may be a compound represented by Formula 3 or 4:

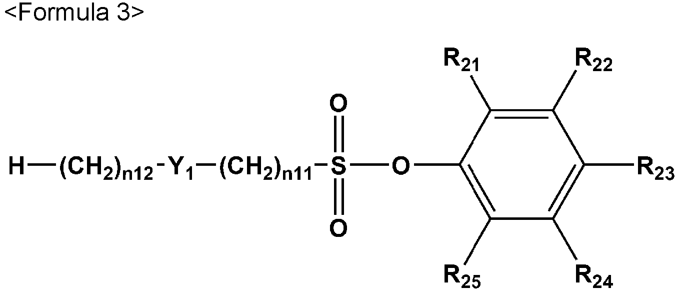

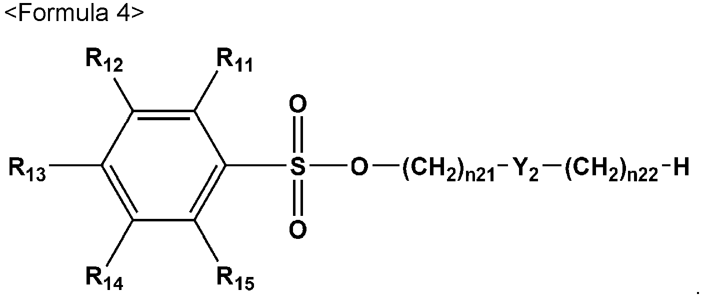

In Formulae 3 and 4,
n11, n12, n21, and n22 are each independently an integer of 0 to 5,
Y₁ and Y₂ are each independently -CH=CH- or -C=C-, and
R₁₁ to R₁₅ and R₂₁ to R₂₅ are each independently selected from hydrogen, a methyl group, an ethyl group, a propyl group, an isopropyl group, a butyl group, a sec-butyl group, a tert-butyl group, and an isobutyl group.

According to an embodiment, in Formulae 3 and 4, each of n12 and n22 is 0, and at least one of R₁₁ to R₁₅ and R₂₁ to R₂₅ may be selected from a methyl group, an ethyl group, a propyl group, an isopropyl group, a butyl group, a sec-butyl group, a tert-butyl group, and an isobutyl group.

For example, the unsaturated compound may be selected from Compounds 1 to 13 below:

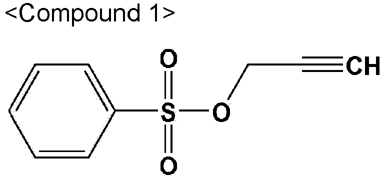

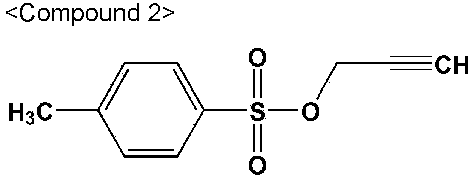

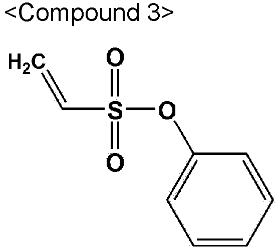

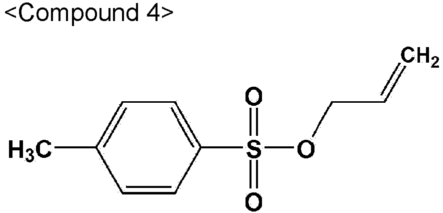

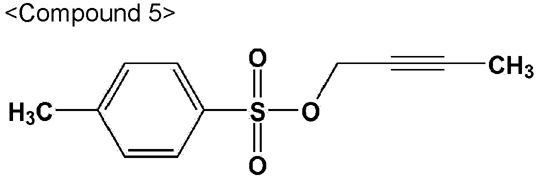

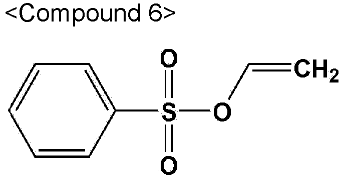

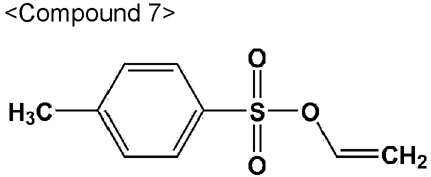

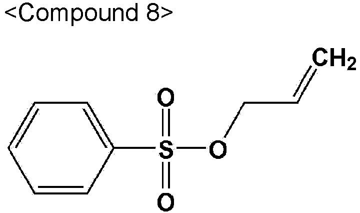

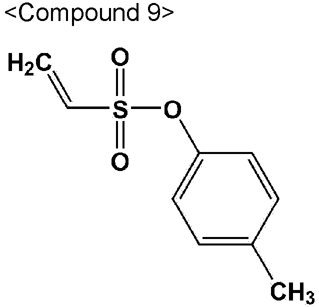

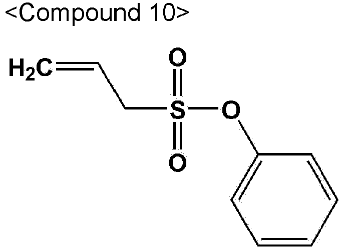

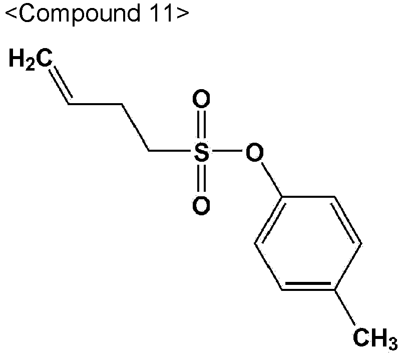

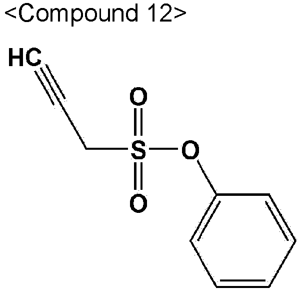

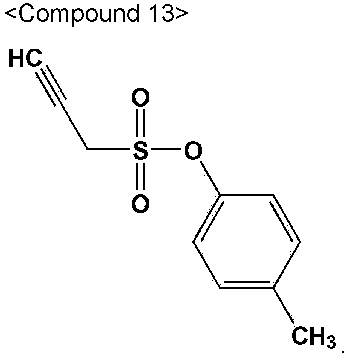

Since the unsaturated compound represented by Formula 2, which is a sulfonate compound including a double bond or a triple bond, has a high reduction potential, the gas generation of the lithium battery may be reduced. Further, since the unsaturated compound forms a stable passivation film (solid electrolyte interphase (SEI) film) capable of capturing Ni cations eluted from the cathode on the surface of the anode to protect the anode, the lifetime characteristics of the lithium battery may be improved.

The electrolyte includes a lithium salt. The lithium salt may be dissolved in an organic solvent, may act as a supply source of lithium ions in the lithium battery, and for example, may promote the migration of lithium ions between the cathode and the anode.

The anion of the lithium salt included in the electrolyte may be at least one selected from PF₆⁻, BF₄⁻, SbF₆⁻, ASF₆⁻, C₄F₉SO₃⁻, ClO₄⁻, AlO₂⁻, AlCl₄⁻, CₓF₂ₓ₊₁SO₃⁻ (where x is a natural number), (CₓF₂ₓ₊₁SO₂)(C_{y}F_{2y+1}SO₂)N⁻ (where x and y are natural numbers), and halide.

The lithium salt included in the electrolyte may include at least one selected from LiPF₆, LiBF₄, LiCF₃SO₃, Li(CF₃SO₂)₂N, LiC₂F₅SO₃, Li(FSO₂)₂N, LiC₄F₉SO₃, LiN(SO₂CF₂CF₃)₂, and compounds represented by Formulae 22 to 25:

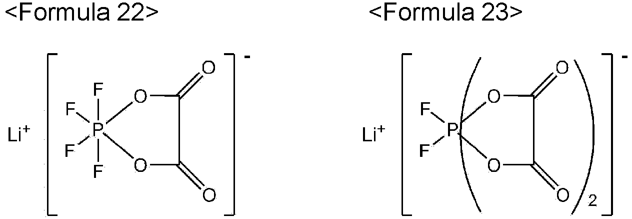

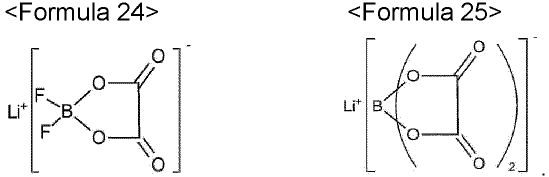

The concentration of the lithium salt may be about 0.01 M to about 5.0 M, about 0.05 M to about 5.0 M, about 0.1 M to about 5.0 M, or about 0.1 M to about 2.0 M, or 1.0 M to 1.5 M, but is not limited to these ranges. Appropriate concentrations may be used as needed.

The amount of the lithium salt in a solvent-free electrolyte may be about 0.001 parts by weight to about 30 parts by weight per 100 parts by weight of the solvent-free electrolyte, but is not limited to this range. The amount thereof is not limited as long as the electrolyte may effectively transfer lithium ions and/or electrons during a charge-discharge process.

The amount of the lithium salt in a solvent-containing electrolyte may be about 100 mM to about 10M. For example, the amount thereof may be about 100 mM to about 2 M. For example, the amount thereof may be about 500 mM to about 2 M. However, the amount thereof is not limited to these ranges. The amount thereof is not limited as long as the electrolyte may effectively transfer lithium ions and/or electrons during a charge-discharge process.

According to an embodiment, the concentration of the lithium salt in the electrolyte may be about 1.1 M to about 2.5 M. For example, the concentration of the lithium salt may be about 1.15 M to about 2.2 M, or about 1.3 M to about 2 M.

The non-aqueous solvent may be selected from a carbonate-based solvent, an ester-based solvent, an ether-based solvent, a ketone-based solvent, a nitrile-based solvent, an aprotic solvent and mixtures thereof.

As the carbonate-based solvent, dimethyl carbonate (DMC), diethyl carbonate (DEC), ethyl methyl carbonate (EMC), dipropyl carbonate (DPC), methyl propyl carbonate (MPC), ethyl propyl carbonate (EPC), methyl ethyl carbonate (EC), propylene carbonate (PC), butylene carbonate (BC), or tetraethylene glycol dimethyl ether (TEGDME) may be used. As the ester-based solvent, methyl acetate, ethyl acetate, n-propyl acetate, dimethylacetate, methyl propionate (MP), ethyl propionate, γ-butyrolactone, decanolide, valerolactone, mevalonolactone, or caprolactone may be used. As the ether-based solvent, dibutyl ether, tetraglyme, diglyme, dimethoxyethane, 2-methyltetrahydrofuran, or tetrahydrofuran may be used. As the ketone-based solvent, cyclohexanone may be used. As the nitrile-based solvent, acetonitrile (AN), succinonitrile (SN), or adiponitrile may be used.

The aprotic solvent may be used alone or in a mixture of two or more. When the aprotic solvent is used in a mixture of two or more, the mixing ratio may be appropriately adjusted depending on battery performance, which is obvious to those skilled in the art.

As other solvents, dimethylsulfoxide, dimethylformamide, dimethylacetamide, tetrahydrofuran, and the like may be used, but examples of the other solvents are not limited thereto. Any solvent may be used as long as it may be used as an organic solvent in the art.

For example, the non-aqueous solvent may include about 50 volume% (vol%) to about 95 vol% of chain carbonate and about 5 vol% to about 50 vol% of cyclic carbonate, about 55 vol% to about 95 vol% of chain carbonate and about 5 vol% to about 45 vol% of cyclic carbonate, about 60 vol% to about 95 vol% of chain carbonate and about 5 vol% to about 40 vol% of cyclic carbonate, about 65 vol% to about 95 vol% of chain carbonate and about 5 vol% to about 35 vol% of cyclic carbonate, or about 70 vol% to about 95 vol% of chain carbonate and about 5 vol% to about 30 vol% of cyclic carbonate. For example, the non-aqueous solvent may be a mixed solvent of three or more kinds of non-aqueous solvents.

In one or more embodiments, the non-aqueous solvent may further include fluoro-ethylene carbonate (FEC), vinylene carbonate (VC), vinyl ethylene carbonate (VEC), a phosphorus (P)-containing compound, or a sulfur (S)-containing compound.

For example, the non-aqueous solvent may include fluoro-ethylene carbonate (FEC). For example, the lithium secondary battery may include the FEC in an amount of about 0.1 vol% to about 10 vol% based on the total volume of the non-aqueous solvent. For example, the lithium secondary battery may include the FEC in an amount of about 0.5 vol% to about 7 vol% based on the total volume of the non-aqueous solvent. For example, the lithium secondary battery may include the FEC in an amount of about 1 vol% to about 7 vol% based on the total volume of the non-aqueous solvent. For example, the lithium secondary battery may include the FEC in an amount of about 2 vol% to about 7 vol% based on the total volume of the non-aqueous solvent. When the FEC is included in the non-aqueous solvent within the above range, an effective SEI film that does not inhibit the diffusion speed of lithium ions may be rapidly formed.

According to an embodiment, the non-aqueous solvent may be selected from dimethyl carbonate (DMC), diethyl carbonate (DEC), ethyl methyl carbonate (EMC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), methyl propionate (MP), ethyl propionate (EP), propyl propionate (PP), tetraethylene glycol dimethyl ether (TEGDME ), and mixtures thereof.

The electrolyte may include a carbonate containing a carbon-carbon single or multiple bond, a carboxylic acid anhydride containing a carbon-carbon single or multiple bond, or a mixture thereof. The multiple bond may be a double bond or a triple bond, and the carbonate and the carboxylic acid anhydride may be linear or cyclic.

According to an embodiment, the electrolyte may include a cyclic carbonate compound, a cyclic acid anhydride compound, a phosphorus (P)-containing compound, a sulfur (S)-containing compound, or a mixture thereof.

According to an embodiment, the electrolyte may include a cyclic carbonate compound, a cyclic acid anhydride compound, or a mixture thereof.

The reduction potential of the unsaturated compound is higher than the reduction potential of the cyclic carbonate compound or the cyclic acid anhydride compound.

According to an embodiment, the amount of the cyclic carbonate compound, the cyclic acid anhydride compound or the mixture thereof may be about 0.1 parts by weight to about 2 parts by weight per 100 parts by weight of the electrolyte.

The cyclic carbonate compound may be, for example, at least one selected from fluoro-ethylene carbonate (FEC), vinylene carbonate (VC), and vinyl ethylene carbonate (VEC).

The cyclic acid anhydride compound may be, for example, at least one selected from maleic anhydride and succinic anhydride.

The P-containing compound may be, for example, at least one selected from a phosphine compound, a phosphate compound, and a phosphite compound.

Examples of the phosphine compound may include, but are not limited to, triphenylphosphine or tris(4-fluorophenyl)phosphine, tris(2,4-difluorophenyl)phosphine, and tris(perfluorophenyl)phosphine. Examples of the phosphate compound may include, but are not limited to, triphenyl phosphate (TPPa) and trimethyl phosphate (TMPa). Examples of the phosphite compound may include, but are not limited to, triethylphosphite (TEPi), trimethylphosphite, tripropylphosphite, tributylphosphite, tris (trimethylsilyl) phosphite, and triphenylphosphite.

The S-containing compound may be, for example, at least one selected from a sulfone compound, a sulfonate compound, a sultone compound, and a disulfonate compound.

Examples of the sulfone compound may include, but are not limited to, ethyl methyl sulfone, divinyl sulfone, and tetramethylene sulfone. Examples of the sulfonate compound may include, but are not limited to, methyl methane sulfonate, ethyl methane sulfonate, and diallyl sulfonate. Examples of the disulfonate compound may include, but are not limited to, methylene methane disulfonate (MMDS) and busulfan. Examples of the sultone compound may include, but are not limited to, fluoropropane sultone (FPS).

According to an embodiment, the electrolyte may be included in the lithium battery in an amount of about 1 g/Ah to about 3 g/Ah.

The cathode includes a cathode active material represented by Formula 1 above.

For example, in Formula 1, A may be any one selected from halogen, S, and N, but is not limited thereto.

In Formula 1, y indicates the amount of Ni in the cathode active material.

Further, according to an embodiment, in Formula 1, M may be at least one element selected from Co, Al, and Mn.

For example, the cathode may include at least one selected from Li_{1.02}Ni_{0.80}Co_{0.15}Mn_{0.05}O₂, Li_{1.02}Ni_{0.85}Co_{0.1}Mn_{0.05}O₂, Li_{1.02}Ni_{0.88}Co_{0.08}Mn_{0.04}O₂, Li_{1.02}Ni_{0.88}Co_{0.10}Mn_{0.02}O₂, Li_{1.02}Ni_{0.91}Co_{0.06}Mn_{0.03}O₂, LiNi_{0.04}Co_{0.04}Mn_{0.02}O₂, Li_{1.02}Ni_{0.80}Co_{0.15}Al_{0.05}O₂, Li_{1.02}Ni_{0.85}Co_{0.1}Al_{0.05}O₂, Li_{1.02}Ni_{0.88}Co_{0.08}Al_{0.04}O₂, Li_{1.02}Ni_{0.88}Co_{0.10}Al_{0.02}O₂, Li_{1.02}Ni_{0.91}Co_{0.06}Al_{0.03}O₂, and LiNi_{0.94}Co_{0.04}Al_{0.02}O₂.

According to an embodiment, in Formula 1, y may satisfy 0.88≤y≤0.98.

For example, the cathode active material may be represented by Formula 30 or 40:

<Formula 30> Li_{x'}Ni_{y'}Co_{1-y'-z'}Al_{z'}O₂

<Formula 40> Li_{x'}Ni_{y'}Co_{1-y'-z'}Mn_{z'}O₂,

In Formulae 30 and 40, 0.9≤x'≤1.2, 0.88≤y'≤0.98, 0<z'<0.1, and 0<1-y'-z'<0.2 are satisfied.

For example, the cathode may include at least one selected from Li_{1.02}Ni_{0.80}Co_{0.15}Mn_{0.05}O₂, Li_{1.02}Ni_{0.85}Co_{0.1}Mn_{0.05}O₂, Li_{1.02}Ni_{0.88}Co_{0.08}Mn_{0.04}O₂, Li_{1.02}Ni_{0.88}C0_{0.10}Mn_{0.02}O₂, Li_{1.02}Ni_{0.91}Co_{0.06}Mn_{0.03}O₂, LiNi_{0.94}Co_{0.04}Mn_{0.02}O₂, Li_{1.02}Ni_{0.80}Co_{0.15}Al_{0.05}O₂, Li_{1.02}Ni_{0.85}Co_{0.1}Al_{0.05}O₂, Li_{1.02}Ni_{0.88}Co_{0.08}Al_{0.04}O₂, Li_{1.02}Ni_{0.88}Co_{0.10}Al_{0.02}O₂, Li_{1.02}Ni_{0.91}Co_{0.06}Al_{0.03}O₂, and LiNi_{0.94}Co_{0.04}Al_{0.02}O₂.

As described above, In the case of a lithium metal oxide having a high content of Ni, despite an advantage of realizing high-capacity batteries, in batteries known in the art, there is a disadvantage of lifetime characteristics being deteriorated with the increase of the amount of Ni³⁺ cations.

Further, as will be described later, a lithium battery including an anode active material including a metal alloyable with lithium or a carbon-based anode active material has disadvantages of the generation of gas by catalysis at high temperature and the deterioration of lifetime characteristics due to the generation of gas.

As described above, when FEC, VC, VEC, MA, SA, the phosphorus (P)-containing compound, or the sulfur (S)-containing compound is included in the above range, a passivation including the chemical reaction product of these materials, that is, an SEI film may be formed on a part or all of the surface of the anode. In this case, since the unsaturated compound includes a double bond or a triple bond to have a high reduction potential, the unsaturated compound is reduced prior to a compound such as FEC, so that the compound such as FEC in the passivation film may be protected, a strong SEI film capable of capturing Ni cations eluted from the cathode may be formed, and gas generation may be prevented during high-temperature storage, thereby realizing the improvement of stability and performance of the lithium battery.

Further, the cathode may further include at least one selected from lithium cobalt oxide, lithium nickel cobalt manganese oxide, lithium nickel cobalt aluminum oxide, lithium iron oxide, and lithium manganese oxide in addition to the above-described cathode active material. However, the present disclosure is not limited thereto, and the cathode may further include all of the cathode active materials available in the art.

The anode may include an anode active material. The anode active material may include at least one selected from a silicon-based compound, a carbon-based compound, a composite of a silicon-based compound and a carbon-based compound, and a silicon oxide (SiOₓ₁, 0<x1<2). For example, the anode may include an anode active material including a metal alloyable with lithium, a silicon-based anode active material, and/or a carbon-based anode active material.

For example, the silicon-based compound includes silicon particles, and the average diameter of the silicon particles may be 200 nm or less.

For example, the carbon-based compound may include graphite.

For example, a composite of a silicon-based compound and a carbon-based compound may be a composite having a structure in which silicon nanoparticles are arranged on a carbon-based compound, a composite having a structure in which silicon particles are included on the surface of the carbon-based compound and inside the carbon-based compound, or a composite having a structure in which silicon particles are coated with the carbon-based compound and included inside the carbon-based compound. The composite of a silicon-based compound and a carbon-based compound may be an active material obtained by dispersing silicon nanoparticles having an average particle diameter of about 200 nm or less on carbon-based compound particles and then carbon-coating the resulting particles, or an active material in which silicon particles exist on graphite and inside graphite. The average particle diameter of secondary particles of the composite of the silicone compound and the carbon-based compound is about 5 µm to about 20 µm, and the average particle diameter of the silicon nanoparticles may be 200 nm or less, 150 nm or less, 100 nm or less, 50 nm or less, 20 nm or less, 10 nm or less. For example, the average particle diameter of the silicon nanoparticles may be about 100 nm to about 150 nm.

For example, the capacity of the composite of the silicone compound and the carbon-based compound may be about 300 mAh/g to about 700 mAh/g. For example, the capacity of the composite of the silicone compound and the carbon-based compound may be about 400 mAh/g to about 600 mAh/g.

The capacity retention rate of the lithium battery at 25 °C after 200 cycles of charging and discharging may be 75 % or more, for example, 80 % or more or 82 % or more. For example, when the anode of the lithium battery includes a silicon-based compound or a silicon oxide, the capacity retention rate of the lithium battery at 25 °C after 200 cycles of charging and discharging may be 85 % or more.

The DCIR increase rate of the lithium battery at 25 °C after 200 cycles of charging and discharging may be 180 % or less. For example, when the anode of the lithium battery includes a silicon-based compound or a silicon oxide, the DCIR increase rate of the lithium battery at 25 °C after 200 cycles of charging and discharging may be 150 % or less, for example, 120 % or less.

The cell energy density of the lithium battery per unit cell volume may be 500 Wh/L or more. The lithium battery may provide a high output by providing a high energy density of 500 Wh/L or more.

The lithium battery is not limited in form, and includes a lithium ion battery, a lithium ion polymer battery, and a lithium sulfur battery.

The lithium secondary battery according to an embodiment may be manufactured by the following method.

First, a cathode is prepared.

For example, a cathode active material composition in which a cathode active material, a conductive agent, a binder, and a solvent are mixed is prepared. The cathode is prepared by coating a cathode current collector with the cathode active material composition. Alternatively, the cathode may be prepared by casting the cathode active material composition onto a separate support, separating a film from the support and then laminating the separated film on a metal current collector. The cathode is not limited to the above-described form, but may have a form other than the above-described form.

The cathode active material may include a general lithium-containing metal oxide in addition to the cathode active material represented by Formula 1 above. As the lithium-containing metal oxide, for example, two or more kinds of composite oxides of lithium and a metal selected from cobalt, manganese, nickel, and combinations thereof may be used.

For example, the cathode active material may further include a compound represented by any one of Formulae of LiₐA_{1-b}B_{b}D₂ (where 0.90 ≤ a ≤ 1.8 and 0 ≤ b ≤ 0.5 are satisfied); LiₐE_{1-b}B_{b}O_{2-c}D_{c} (where 0.90 ≤ a ≤ 1.8, 0 ≤ b ≤ 0.5, and 0 ≤ c ≤ 0.05 are satisfied); LiE_{2-b}B_{b}O_{4-c}D_{c} (where 0 ≤ b ≤ 0.5 and 0 ≤ c ≤ 0.05 are satisfied); LiₐNi_{1-b-c}Co_{b}B_{c}D_{α} (where 0.90 ≤ a ≤ 1.8, 0 ≤ b ≤ 0.5, 0 ≤ c ≤ 0.05, and 0 < α ≤ 2 are satisfied); LiₐNi_{1-b-c}CoₚB_{c}O_{2-α}F_{α} (where 0.90 ≤ a ≤ 1.8, 0 ≤ b ≤ 0.5, 0 ≤ c ≤ 0.05, and 0 < α < 2 are satisfied); LiₐNi_{1-b-c}Co_{b}B_{c}O_{2-α}F₂ (where 0.90 ≤ a ≤ 1.8, 0 ≤ b ≤ 0.5, 0 ≤ c ≤ 0.05, and 0 < α < 2 are satisfied); LiₐNi_{1-b-c}Mn_{b}B_{c}D_{α} (where 0.90 ≤ a ≤ 1.8, 0 ≤ b ≤ 0.5, 0 ≤ c ≤ 0.05, and 0 < α ≤ 2 are satisfied); LiₐNi_{1-b-c}Mn_{b}B_{c}O_{2-α}F_{α} (where 0.90 ≤ a ≤ 1.8, 0 ≤ b ≤ 0.5, 0 ≤ c ≤ 0.05, and 0 < α < 2 are satisfied); LiₐNi_{1-b-c}Mn_{b}B_{c}O_{2-α}F₂ (where 0.90 ≤ a ≤ 1.8, 0 ≤ b ≤ 0.5, 0 ≤ c ≤ 0.05, and 0 < α < 2 are satisfied); LiₐNi_{b}E_{c}G_{d}O₂ (where 0.90 ≤ a ≤ 1.8, 0 ≤ b ≤ 0.9, 0 ≤ c ≤ 0.5, and 0.001 ≤ d ≤ 0.1 are satisfied); LiₐNi_{b}Co_{c}Mn_{d}GₑO₂ (where 0.90 ≤ a ≤ 1.8, 0 ≤ b ≤ 0.9, 0 ≤ c ≤ 0.5, 0 ≤ d ≤0.5, and 0.001 ≤ e ≤ 0.1 are satisfied); LiₐNiG_{b}O₂ (where 0.90 ≤ a ≤ 1.8 and 0.001 ≤ b ≤ 0.1 are satisfied); LiₐCoG_{b}O₂ (where 0.90 ≤ a ≤ 1.8 and 0.001 ≤ b ≤ 0.1 are satisfied); LiₐMnG_{b}O₂ (where 0.90 ≤ a ≤ 1.8 and 0.001 ≤ b ≤ 0.1 are satisfied); LiₐMn₂G_{b}O₄ (where 0.90 ≤ a ≤ 1.8 and 0.001 ≤ b ≤ 0.1 are satisfied); QO₂; QS₂; LiQS₂; V₂O₅; LiV₂O₅; LilO₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄.

In the formulae above, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

For example, the compound may be LiCoO₂, LiMnₓO₂ₓ (where x=1 or 2), LiNi₁₋ₓMnₓO₂ₓ (where 0<x<1), LiNi_{1-x-y}CoₓMn_{y}O₂ (where 0≤x≤0.5, 0≤y≤0.5, and 1-x-y>0.5 are satisfied), or LiFePO₄.

In one or more embodiments, a compound having a coating layer on the surface of the compound may be used, or a mixture of the compound and a compound having a coating layer may be used. This coating layer may include a coating element compound of an oxide of a coating element, a hydroxide of a coating element, an oxyhydroxide of a coating element, an oxycarbonate of a coating element, or a hydroxycarbonate of a coating element. The compound constituting this coating layer may be amorphous or crystalline.

As the coating element included in the coating layer, Mg, Al, Co, K, Na, Ca, Si, Ti, V, Sn, Ge, Ga, B, As, Zr, or a mixture thereof may be used. In the process of forming the coating layer, any coating method may be used as long as this compound may be coated with such elements by a method that does not adversely affect the physical properties of the cathode active material (for example, spray coating, dipping or the like). This coating method will be understood by those skilled in the art, so that a detailed description thereof will be omitted.

A conductive agent, a filler, and the like may be further added to the cathode active material composition.

The conductive agent is usually added in an amount of 1 wt% to 30 wt% based on the total weight of the mixture including the cathode active material. Such a conductive agent is not limited as long as it has electrical conductivity without causing a chemical change in the battery, and examples thereof may include graphite such as natural graphite or artificial graphite; carbon black, acetylene black, ketjen black, channel black, furnace black, lamp black, and summer black; conductive fibers such as carbon fiber and metal fiber; carbon fluoride; metal powder such as aluminum powder and nickel powder; conductive whiskey such as zinc oxide and potassium titanate; conductive metal oxides such as titanium oxide; and conductive agents such as polyphenylene derivatives.

The binder is a component that assists in binding of the active material and the conductive agent and binding of the active material to the current collector, and is added in an amount of about 1 wt% to about 30 wt% based on the total weight of the cathode active material composition. Examples of the binder may include polyvinylidene fluoride (PVdF), polyvinylidene chloride, polybenzimidazole, polyimide, polyvinyl acetate, polyacrylonitrile, polyvinyl alcohol, carboxymethylcellulose (CMC), starch, hydroxypropylcellulose, regenerated cellulose, polyvinylpyrrolidone, polyethylene, polypropylene, polystyrene, polymethyl methacrylate, polyaniline, acrylonitrile butadiene styrene resin, phenol resin, epoxy resin, polyethylene terephthalate, polytetrafluoroethylene, polyphenylene sulfide, polyamideimide, polyetherimide, polyether sulfone, polyamide, polyacetal, polyphenylene oxide, polybutylene terephthalate, ethylene-propylene-diene terpolymer (EPDM), sulfonated EPDM, styrene butadiene rubber (SBR), fluorine rubber, and various copolymers. The filler is a component for suppressing the expansion of the cathode, is selectively used, is not limited as long as it is a fibrous material not causing a chemical change in the battery, and examples thereof may include olefin polymers such as polyethylene and polypropylene; and fibrous materials such as glass fiber and carbon fiber.

As the solvent, N-methylpyrrolidone, acetone, water, or the like may be used, but not limited thereto, and any solvent which may be used in the technical field may be used. The amount of the solvent is, for example, 10 parts by weight to 100 parts by weight based on 100 parts by weight of the cathode active material. When the amount of the solvent is within the above range, it is easy to form an active material layer.

The amount of the cathode active material, the amount of the conductive agent, the amount of the filler, and the amount of the solvent are levels commonly used in the lithium battery. At least one of the conductive agent, the filler, the binder and the solvent may be omitted depending on the use and configuration of the lithium battery.

For example, N-methylpyrrolidone (NMP) may be used as the solvent, a PVdF or PVdF copolymer may be used as the binder, and carbon black or acetylene black may be used as the conductive agent. For example, 94 weight% (wt%) of the cathode active material, 3 wt% of the binder, and 3 wt% of the conductive agent are mixed in a powder state, NMP is added such that solid content is 70 wt% to make a slurry, and then, the prepared slurry is coated, dried, and rolled to manufacture the cathode.

The cathode current collector is generally manufactured to have a thickness of about 3 µm to about 50 µm. This cathode current collector is not limited as long as it has high conductivity without causing a chemical change in the battery. For example, the cathode current collector may include stainless steel, aluminum, nickel, titanium, or fired carbon, or may include aluminum or stainless steel surface-treated with carbon, nickel, titanium or silver. The cathode current collector may form fine irregularities on its surface to increase the adhesive force of the cathode active material, and may various forms such as film, sheet, foil, net, porous body, foam, and nonwoven fabric.

For example, the cathode is produced by applying, drying and pressing a cathode active material on a cathode current collector, and a cathode active material composition in which a binder is mixed with a solvent is prepared as needed in addition to the above-described active material. The cathode active material composition is directly applied on a metal current collector and dried to produce a cathode plate. Alternatively, the cathode active material composition is cast onto a separate support, a film is separated from the support, and then the separated film is laminated on a metal current collector to produce a cathode plate.

For example, the loading level of the produced cathode active material may be 30 mg/cm² or more, for example, 35 mg/cm² or more, and for example, 40 mg/cm² or more. Further, electrode density may be 3 g/cc or more, for example, 3.5 g/cc or more.

In an embodiment, for high cell energy density, the loading level of the produced cathode active material may be about 35 mg/cm² to about 50 mg/cm², and the electrode density may be about 3.5 g/cc to about 4.2 g/cc or more.

In another embodiment, both sides of the cathode plate may be coated with the cathode active material composition at a loading level of 37 mg/cm² and an electrode density of 3.6 g/cc

When the loading level of the cathode active material and the electrode density satisfy the above ranges, a battery including this cathode active material may exhibit a high cell energy density of 500 wh/L or more. For example, the battery may exhibit a cell energy density of about 500 wh/L to about 900 wh/L.

Next, an anode is prepared.

For example, an anode active material composition in which an anode active material, a conductive agent, a binder, and a solvent are mixed is prepared.

The anode is prepared by directly coating an anode current collector with the anode active material composition and drying the anode active material composition. Alternatively, the anode may be prepared by casting the anode active material composition onto a separate support, separating a film from the support and then laminating the separated film on a metal current collector.

The anode active material may be, for example, a silicon-based compound, silicon oxide (SiOₓ, 0<x<2), or a composite of a silicon-based compound and a carbon-based material. Here, the size (for example, average particle diameter) of silicon particles may be less than 200 nm, for example, about 10 nm to about 150 nm. The term "size" may refer to an average particle diameter when silicon particles are spherical, and may refer to an average long axis length when the silicon particles are non-spherical.

When the size of the silicon particles is within the above range, lifetime characteristics are good, and thus the lifetime of a lithium secondary battery is further improved when the electrolyte according to an embodiment is used.

The carbon-based material may be crystalline carbon, amorphous carbon, or a mixture thereof. The crystalline carbon may be graphite such as natural graphite or artificial graphite of an amorphous, plate-like, flake-like, spherical or fibrous form. The amorphous carbon may be soft carbon (low-temperature fired carbon), hard carbon, mesophase pitch carbide, or fired coke.

The composite of a silicon-based compound and a carbon-based material may be a composite having a structure in which silicon particles are arranged on graphite, or a composite having a structure in which silicon particles are included on the surface of graphite and inside graphite. The composite may be, for example, an active material in which silicon (Si) particles having an average particle diameter of 200 nm or less, for example, about 100 nm to about 200 nm, and for example, 150 nm are dispersed on graphite particles and then coated with carbon, or an active material in which silicon (Si) particles exist on graphite and inside graphite. Such a composite is available as the trade name SCN1 (Si particle on Graphite) or SCN2 (Si particle inside as well as on graphite). SCN1 may be an active material obtained by dispersing Si particles having an average particle diameter of about 150 nm on graphite particles and then coating the dispersed Si particles with carbon. SCN2 is an active material in which silicon (Si) particles having an average particle diameter of about 150 nm exist on graphite and inside graphite.

The anode active material may be used together with the above-described anode active material as long as it may be used as the anode active material of a lithium secondary battery in the related art. For example, the anode active material may be Si, Sn, Al, Ge, Pb, Bi, Sb, a Si-Y' alloy (Y' is selected from alkali metals, alkaline earth metals, Group 13 to Group 16 elements, transition metals, transition metal oxides, rare earth elements, and combinations thereof, not Si), or a Sn-Y' alloy (Y' is selected from alkali metals, alkaline earth metals, Group 13 to Group 16 elements, transition metals, transition metal oxides, rare earth elements, and combinations thereof, not Sn). The element Y' may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, or a combination thereof.

For example, the anode active material may be lithium titanium oxide, vanadium oxide, or lithium vanadium oxide.

A conductive agent, a filler, and the like may be further added to the anode active material composition.

Meanwhile, the binder, solvent, conductive agent and filler in the anode active material composition may be the same as those in the above-described cathode active material composition.

However, in the anode active material composition, water may be used as the solvent. For example, water may be used as the solvent, carboxymethyl cellulose (CMC), styrene butadiene rubber (SBR), an acrylate-based polymer, or a methacrylate-based polymer may be used as the binder, and carbon black, acetylene black, or graphite may be used as the conductive agent.

The amount of the anode active material, the amount of the conductive agent, the amount of the binder, and the amount of the solvent are levels commonly used in the lithium secondary battery. At least one of the conductive agent, the binder, and the solvent may be omitted depending on the use and configuration of the lithium secondary battery.

For example, 94 wt% of the anode active material, 3 wt% of the binder, and 3 wt% of the conductive agent are mixed in a powder state, water is added such that solid content is 70 wt% to make a slurry, and then, the prepared slurry is coated, dried, and rolled to manufacture an anode plate.

The anode current collector is generally manufactured to have a thickness of about 3 µm to about 50 µm. This anode current collector is not limited as long as it has high conductivity without causing a chemical change in the battery. For example, the anode current collector may include copper, stainless steel, aluminum, nickel, titanium, or fired carbon, may include copper or stainless steel surface-treated with carbon, nickel, titanium or silver, or may include an aluminum-cadmium alloy. Similarly to the cathode current collector, the anode current collector may form fine irregularities on its surface to increase the adhesive force of the anode active material, and may various forms such as film, sheet, foil, net, porous body, foam, and nonwoven fabric.

The loading level of the prepared anode active material composition is set according to the loading level of the cathode active material composition.

For example, the loading level of the anode active material composition may be 12 mg/cm² or more, for example, 15 mg/cm² or more, depending on the capacity of the anode active material composition per g. Further, electrode density may be 1.5 g/cc or more, for example, 1.6 g/cc or more.

In an embodiment, for high cell energy density, the loading level of the produced anode active material may be about 15 mg/cm² to about 25 mg/cm², and the electrode density may be about 1.6 g/cc to about 2.3 g/cc or more.

When the loading level of the anode active material and the electrode density satisfy the above ranges, a battery including this cathode active material may exhibit a high cell energy density of 500 Wh/L or more.

Next, a separator to be inserted between the anode and the cathode is prepared.

As the separator, any separator may be used as long as it is commonly used in a lithium battery. A separator having low resistance to the movement of ions in the electrolyte and superior in electrolyte wettability may be used. For example, the separator may include any one selected from glass fiber, polyester, Teflon, polyethylene, polypropylene, polytetrafluoroethylene (PTFE), and combinations thereof, and may be made in the form of nonwoven fabric or woven fabric. For example, a windable separator including polyethylene, polypropylene, or the like may be used in a lithium ion battery, and a separator having good electrolyte impregnation ability may be used in a lithium ion polymer battery. For example, the separation film may be produced by the following method.

A polymer resin, a filler, and a solvent are mixed to prepare a separator composition. The separator composition is directly applied on an electrode and dried to form a separator. Further, the separator composition is cast on a support and dried, a separation film is separated from the support, and then the separation film is laminated on the electrode to form a separator.

The polymer resin used in the production of the separator is not limited, and any material may be used as long as it may be used in a binder of an electrode plate. For example, as the polymer resin, a vinylidene fluoride/hexafluoropropylene copolymer, polyvinylidene fluoride (PVDF), polyacrylonitrile, polymethyl methacrylate, or a mixture thereof may be used.

Next, the above-described electrolyte is prepared.

According to an embodiment, in addition to the above-described electrolyte, a non-aqueous electrolyte, a solid electrolyte, an organic solid electrolyte, or an inorganic solid electrolyte may be used.

As the organic solid electrolyte, for example, a polyethylene derivative, a polyethylene oxide derivative, a polypropylene oxide derivative, a phosphate ester polymer, a polyester sulfide, a polyvinyl alcohol, a polyvinylidene fluoride, or a polymer including an ionic dissociation group may be used.

As the inorganic solid electrolyte, for example, Li₃N, Lil, Li₅NI₂, Li₃N-LiI-LiOH, LiSiO₄, Li₂SiS₃, Li₄SiO₄, Li₄SiO₄-Lil-LiOH, or Li₃PO₄-Li₂S-SiS₂ may be used.

As shown in the FIGURE, the lithium secondary battery 1 includes a cathode 3, an anode 2, and a separator4. The anode 3, the cathode 2, and the separator 4 are wound or folded and accommodated in a battery case 5. Then, an electrolyte is injected into the battery case 5, and the battery case 5 is sealed with a cap assembly 6 to complete the manufacture of the lithium secondary battery 1. The battery case 5 may have a cylindrical shape, a rectangular shape, or a thin film shape. For example, the lithium secondary battery 1 may be a large-sized thin-film battery. The lithium secondary battery 1 may be a lithium ion battery.

The separator may be located between the anode and the cathode to form a battery structure. The battery structure is laminated as a bi-cell structure and then impregnated with an electrolyte, and the resulting product is accommodated in a pouch and sealed to complete a lithium ion polymer battery.

Further, the plurality of battery structures are laminated to form a battery pack, and this battery pack may be used in all appliances requiring high capacity and high power. For example, the battery pack may be used in notebooks, smart phones, electric vehicles, and the like.

The lithium secondary battery according to an embodiment significantly reduces a DCIR increase rate as compared with a lithium secondary battery employing a general nickel-rich lithium-nickel composite oxide as a cathode active material, and thus may exhibit good battery characteristics.

The operating voltage of the lithium secondary battery to which the anode, the cathode and the electrolyte are applied is, for example, about 2.5 V to about 2.8 V as a lower limit and about 4.1 V to about 4.4 V as an upper limit, and energy density is 500 wh/L or more, which is good.

Further, the lithium secondary battery may be used in, for example, power tools operated by a power from an electric motor; electric vehicles including a hybrid electric vehicle (HEV) and a plug-in hybrid electric vehicle (PHEV); electric motorcycles including an electric bike (E-bike) and an electric scooter (E-scooter); electric golf carts; and power storage systems, but the present disclosure is not limited thereto.

As used herein, alkyl refers to fully saturated branched or unbranched (or straight or linear) hydrocarbons.

Non-limiting examples of "alkyl" may include methyl, ethyl, n-propyl, isopropyl, n-butyl, isobutyl, sec-butyl, n- pentyl, isopentyl, neopentyl, n-hexyl, 3-methylhexyl, 2,2-dimethylpentyl, 2,3-dimethylpentyl, and n-heptyl.

At least one hydrogen atom of "alkyl" may be substituted with a halogen atom, a C₁-C₂₀ alkyl group substituted with a halogen atom (for example, CF₃, CHF₂, CH₂F, or CCl₃), a C₁-C₂₀ alkoxy group, a C₂-C₂₀ alkoxyalkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid group or a salt thereof, phosphoric acid or a salt thereof, a C₁-C₂₀ alkyl group, a C₂-C₂₀ alkenyl group, a C₂-C₂₀ alkynyl group , a C₁-C₂₀ heteroalkyl group, a C₆-C₂₀ aryl group, a C₆-C₂₀ arylalkyl group, a C₆-C₂₀ heteroaryl group, a C₇-C₂₀ heteroarylalkyl group, a C₆-C₂₀ heteroaryloxy group, a C₆-C₂₀ heteroaryloxyalkyl group, or a C₆-C₂₀ heteroarylalkyl group.

The term "halogen" includes fluorine, bromine, chlorine, and iodine.

The "alkoxy" denotes "alkyl-O-", wherein alkyl is as described above. Examples of the alkoxy group may include a methoxy group, an ethoxy group, a 2-propoxy group, a butoxy group, a t-butoxy group, a pentyloxy group, and a hexyloxy group. At least one hydrogen atom of the alkoxy may be substituted with the same substituent as described in connection with the alkyl group.

The "alkenyl" refers to branched or unbranched hydrocarbons having at least one carbon-carbon double bond. Non-limiting examples of the alkenyl group may include vinyl, allyl, butenyl, propenyl, and isobutenyl, and at least one hydrogen atom of the alkenyl may be substituted with the same substituent as described in connection with the alkyl group.

The "alkynyl" refers to branched or unbranched hydrocarbons having at least one carbon-carbon triple bond. Non-limiting examples of the alkynyl may include ethynyl, butynyl, isobutynyl, and isopropynyl.

At least one hydrogen atom of the alkynyl may be substituted with the same substituent as the above-described alkyl group. The "aryl" includes a group in which an aromatic ring is selectively fused to one or more carbon rings. Non-limiting examples of the aryl may include phenyl, naphthyl, and tetrahydronaphthyl. At least one hydrogen atom of the "aryl" group may be substituted with the same substituent as described in connection with the alkyl group.

The "heteroaryl" refers to a monocyclic or bicyclic organic group including at least one heteroatom selected from N, O, P, or S and having carbon atoms as remaining ring atoms. The heteroaryl group may include, for example, 1 to 5 hetero atoms, and may include 5-10 ring members. The S or N may be oxidized to have various oxidation states.

Examples of the heteroaryl may include thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, isothiazol-3-yl, isothiazol-4-yl, isothiazol-5-yl, oxazol-2-yl, oxazol-4-yl, oxazol-5-yl, isoxazol-3-yl, isoxazol-4-yl, isoxazol-5-yl, 1,2,4-triazol-3-yl, 1,2,4-triazol-5-yl, 1,2,3-triazol-4-yl, 1,2,3-triazol-5-yl, tetrazolyl, pyrid-2-yl, pyrid-3-yl, 2-pyrazin-2-yl, pyrazin-4-yl, pyrazin-5-yl, 2-pyrimidin-2-yl, 4-pyrimidin-2-yl, and 5-pyrimidin-2-yl.

The term "heteroaryl" includes a case where a heteroaromatic ring is selectively fused to at least one of aryl, cycloaliphatic, and heterocyclic.

Hereinafter, the present disclosure will be described in more detail with reference to Examples and Comparative Examples. However, these Examples are for illustrating the present disclosure, and the scope of the present disclosure is not limited thereto.

### [Examples]

### Examples 1 to 10 and Comparative Examples 1 to 8

Lithium batteries were manufactured according to the components shown in Tables 2 and 3 below. Each of the components was prepared as follows.

### (Preparation of cathode 1)

LiNi_{0.88}Co_{0.10}Mn_{0.02}O₂ was used as a cathode active material, carbon black was used as a conductive agent, and PVdF was used as a binder. The cathode active material, the conductive agent, and the binder were mixed with N-methylpyrrolidone (NMP) at a weight ratio of 97.7:1:1.1, and then, the mixture was dispersed on an aluminum foil having a thickness of 15 µm at 33 mg/cm² per one side to coat both sides of the aluminum foil with the mixture. The aluminum foil was dried and rolled to prepare cathode 1 having an electrode density of 3.6 g/cc.

### (Preparation of cathode 2)

LiNi_{0.88}Co_{0.10}Mn_{0.02}O₂ was used as a cathode active material, carbon black was used as a conductive agent, and PVdF was used as a binder. The cathode active material, the conductive agent, and the binder were mixed with N-methylpyrrolidone (NMP) at a weight ratio of 97.7:1:1.1, and then the mixture was dispersed on an aluminum foil having a thickness of 12 µm at 33.6 mg/cm² per one side to coat both sides of the aluminum foil with the mixture. The aluminum foil was dried and rolled to prepare cathode 1 having an electrode density of 3.6 g/cc.

### (Preparation of anode 1)

Anode active material SSC-G (an active material designed to exhibit a capacity of 1,300 mAh/g by making secondary particles containing Si of 100 nm in size and carbon-coating the secondary particles with CVD and pitch), graphite, and a binder (AG binder) were mixed with NMP at a weight ratio of 14.7:85.3, and then the mixture was dispersed on a copper foil having a thickness of 8 µm at 15.6 mg/cm² per one side to coat both sides of the copper foil with the mixture. The copper foil was dried and rolled too prepare anode 1 having an electrode density of 1.65 g/cc.

### (Preparation of anode 2)

Anode active material SSC-G (an active material designed to exhibit a capacity of 1300 mAh/g by making secondary particles containing Si of 100 nm in size and carbon-coating the secondary particles with CVD and pitch), graphite, and a binder (AG binder) were mixed with NMP at a weight ratio of 14.7:85.3, and then the mixture was dispersed on a copper foil having a thickness of 8 µm at 15.5 mg/cm² per one side to coat both sides of the copper foil with the mixture. The copper foil was dried and rolled to prepare anode 1 having an electrode density of 1.65 g/cc.

### (Preparation of electrolyte)

1.15 M LiPF₆ and FEC/EC/EMC/DMC (volume ratio: 3/10/47/40) were used as solvent 1, 1.3 M LiPF₆, FEC/EC/EMC/DMC (volume ratio: 5/20/35/40), and TMP (2 wt%) were used as solvent 2, and 1.3 M LiPF₆, FEC/EC/EMC/DMC (volume ratio: 3/15/12/70) were used as solvent 3. Additives given in Tables 2 and 3 below are added to solvents 1 to 3 to prepare an electrolyte. The structure of each of the additives is shown in Table 1 below.

**[Table 1]**

| **Abbreviation** | Chemical Name | **Structure** |
|---|---|---|
| PBSN | Propargyl benzenesulfonate | 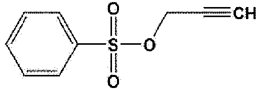 |
| PTSN | Propargyl p-toluenesulfonate | 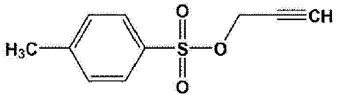 |
| PVSN | Phenyl vinlysulfonate | 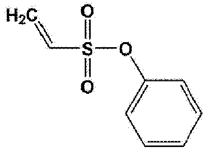 |
| ATSN | Allyl p-toluenesulfonate | 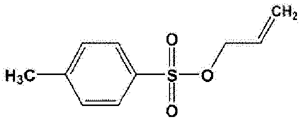 |
| BTSN | 2-Butynyl p-toluenesulfonate | 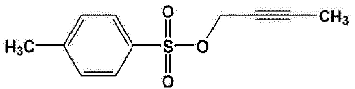 |
| PhpTs | Phenyl p-Toluenesulfonate | 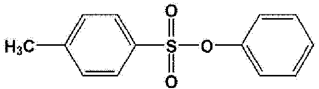 |
| PMSN | Phenyl methanesulfonate | 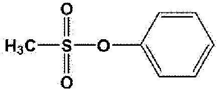 |
| MTSN | Methyl p-toluenesulfonate | 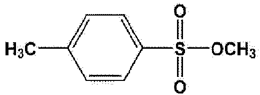 |
| ETSN | Ethyl p-toluenesulfonate | 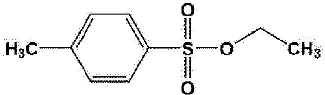 |
| MMDS | Methylene methyl disulfonate | 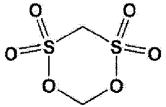 |
| BR11 | Methylene bis(methanesulfonate) | 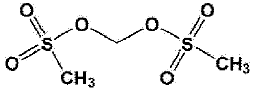 |

### (Assembly of lithium battery)

A separator including polypropylene and having a thickness of 16 µm was interposed between the cathode and the anode, and the electrolyte was injected to manufacture a lithium battery.

### Evaluation Example 1: Evaluation of gas generation amount and DC internal resistance

Each of the lithium batteries manufactured in Examples 1 to 5 and Comparative Examples 1 to 7 was charged with a current of 0.2 C rate at 25 °C until a voltage reached 3.6 V (vs. Li), and then discharged at a constant current of 0.2 rate until a voltage reached 2.8 V (vs. Li) (formation, 1^{st} cycle). Thereafter, each of the lithium batteries was charged with a current of 0.2 C rate until a voltage reached 4.25 V (vs. Li), and then discharged at a constant current of 0.2 rate until a voltage reached 2.8 V (vs. Li) (formation, 2^{nd} cycle). Third, each of the lithium batteries was charged with a current of 0.5 C rate until a voltage reached 4.25 V (vs. Li), and then cut off at a current of 0.05 C rate while maintaining 4.25 V of a voltage in a constant voltage mode. Then, each of the lithium batteries was discharged at a constant current of 0.2 rate until a voltage reached 2.8 V (vs. Li). Fourth, the third formation process was repeated (0.5 C charging / 0.2 C discharging). Finally, each of the lithium batteries was charged with a current of 0.2 C rate until a voltage reached 4.25 V (vs. Li), and then cut off at a current of 0.05 C rate while maintaining 4.25 V of a voltage in a constant voltage mode.

Here, the 1C charging means that the battery is charged such that the capacity (mAh) of the battery may be reached by charging for 1 hour. Similarly, the 1C discharging means that the battery is discharged such that the capacity (mAh) of the battery may be completely consumed by discharging for 1 hour.

Each of the lithium batteries having been subject to the above formation processes was left at 60 °C for 10 days, and then gas generation amount and internal resistance characteristics were evaluated. The results thereof are shown in Table 2 below.

**[Table 2]**

| | Electrolyte | | Cathode | Anode | Gas generation amount (10D at 60°C) [relative value (%)] | 0D DCIR (mΩ) | 10D DCIR (mΩ) | ADCIR (%) |
|---|---|---|---|---|---|---|---|---|
| | Solvent | additive | | | | | | |
| Example 1 | Solvent 1 | 0.5 wt% PBSN | Cathode 1 | Anode 1 | 0.61 [79%] | 141 | 146 | 104 |
| Example 2 | Solvent 1 | 0.5 wt% PTSN | Cathode 1 | Anode 1 | 0.55 [70%] | 143 | 147 | 103 |
| Example 3 | Solvent 1 | 0.5 wt% PVSN | Cathode 1 | Anode 1 | 0.63 [81%] | 138 | 139 | 100 |
| Example 4 | Solvent 1 | 0.5 wt% ATSN | Cathode 1 | Anode 1 | 0.63 [81%] | 136 | 138 | 102 |
| Example 5 | Solvent 1 | 0.5 wt% BTSN | Cathode 1 | Anode 1 | 0.65 [83%] | 138 | 139 | 101 |
| Comparative Example 1 | Solvent 1 | - | Cathode 1 | Anode 1 | 0.78 [100%] | 131 | 132 | 100 |
| Comparative Example 2 | Solvent 1 | 0.5 wt% PhpTs | Cathode 1 | Anode 1 | 0.72 [92%] | 136 | 140 | 103 |
| Comparative Example 3 | Solvent 1 | 0.5 wt% PMSN | Cathode 1 | Anode 1 | 0.78 [99%] | 130 | 132 | 102 |
| Comparative Example 4 | Solvent 1 | 0.5 wt% MTSN | Cathode 1 | Anode 1 | 0.71 [90%] | 131 | 135 | 103 |
| Comparative Example 5 | Solvent 1 | 0.5 wt% ETSN | Cathode 1 | Anode 1 | 0.70 [90%] | 130 | 136 | 105 |
| Comparative Example 6 | Solvent 1 | 0.5 wt% MMDS | Cathode 1 | Anode 1 | 0.71 [91%] | 142 | 127 | 90 |
| Comparative Example 7 | Solvent 1 | 0.5 wt% BR11 | Cathode 1 | Anode 1 | 0.77 [98%] | 133 | 128 | 96 |

Referring to Table 2 above, it was found that the lithium batteries of Examples 1 to 5 remarkably reduced gas generation amounts, and exhibit DC internal resistance increase rates at a substantially equal level, and thus exhibit good stability, as compared with the lithium batteries of Comparative Examples 1 to 7.

### Evaluation Example 2: Evaluation of lifetime characteristics

Lithium batteries manufactured in Examples 6 to 10 and Comparative Example 8 were respectively charged and discharged at 45 °C during 200 cycles under the conditions of a charge-discharge current of 1C/1C, an operation voltage of 2.8 V to 4.3 V, and a cutoff of CC-CV 1/10C, and then lifetimes and DC internal resistances thereof were measured. The measured results are given in Table 3 below.

**[Table 3]**

| | Electrolyte | | Cathode | Anode | Lifetime (%) | Initial resistance (mΩ) | Resistance after 200 cycles (mΩ) | ADCIR (%) |
|---|---|---|---|---|---|---|---|---|
| | Solvent | Additive | | | | | | |
| Example 6 | Solvent 1 | 0.5wt% ATSN | Cathode 2 | Anode 2 | 80 | 155 | 180 | 116 |
| Example 7 | Solvent 2 | 0.6wt% PVSN | Cathode 2 | Anode 2 | 83 | 148 | 169 | 114 |
| Example 8 | Solvent 2 | 1.0wt% PVSN | Cathode 2 | Anode 2 | 82 | 148 | 176 | 119 |
| Example 9 | Solvent 2 | 0.6wt% PTSN | Cathode 2 | Anode 2 | 83 | 159 | 173 | 109 |
| Example 10 | Solvent 3 | 0.5wt% PBSN | Cathode 1 | Anode 1 | 83 | 139 | 173 | 124 |
| Comparative Example 8 | Solvent 1 | - | Cathode 2 | Anode 2 | 81 | 154 | 180 | 117 |

Referring to Table 3 above, it was found that the lithium batteries of Examples 6 to 10 exhibit lifetimes at a substantially equal or higher level, and/or DC internal resistance increase rates at a substantially equal or lower level, and thus exhibit good stability, as compared with the lithium battery of Comparative Example 8.

As described above, according to an embodiment, an organic electrolyte including the unsaturated compound is employed, so that the side reaction of the lithium battery is suppressed, and gas reduction characteristics and lifetime characteristics are improved.

It should be understood that embodiments described herein should be considered in a descriptive sense only and not for purposes of limitation. Descriptions of features or aspects within each embodiment should be considered as available for other similar features or aspects in other embodiments.

## Claims

1. A lithium battery comprising:
a cathode;
an anode; and
an electrolyte between the cathode and the anode,
wherein the cathode includes a cathode active material represented by Formula 1, and
the electrolyte includes a lithium salt, a non-aqueous solvent, and an unsaturated compound represented by Formula 2:
<Formula 1> LiₓNi_{y}M_{1-y}O_{2-z}A_{z}
wherein, in Formula 1, 0.9≤x≤1.2, 0.7≤y≤0.98, and 0≤z<0.2 are satisfied,
M is at least one element selected from Al, Mg, Mn, Co, Fe, Cr, V, Ti, Cu, B, Ca, Zn, Zr, Nb, Mo, Sr, Sb, W, and Bi, and
A is an element having an oxidation number of -1 or -2, 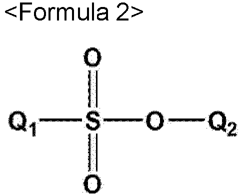
wherein, in Formula 2, one of Q₁ and Q₂ is a group represented by -(L₁)-(R₁), and the other of Q₁ and Q₂ is a group represented by -(L₂)-(R₂),
L₁ is selected from a substituted or unsubstituted C₂-C₂₀ alkenylene group and a substituted or unsubstituted C₂-C₂₀ alkynylene group,
L₂ is a substituted or unsubstituted C₆-C₆₀ arylene group, and
R₁ and R₂ are each independently selected from hydrogen, a substituted or unsubstituted linear or branched alkyl group, and a substituted or unsubstituted C₆-C₆₀ aryl group;
wherein the substituent(s) of the substituted C₂-C₂₀ alkenylene group, substituted C₂-C₂₀ alkynylene group, substituted C₆-C₆₀ arylene group, substituted linear or branched alkyl group and substituted C₆-C₆₀ aryl group is selected from a halogen atom, a C₁-C₂₀ alkyl group substituted with a halogen atom, a C₁-C₂₀ alkoxy group, a C₂-C₂₀ alkoxyalkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid group or a salt thereof, phosphoric acid or a salt thereof, a C₁-C₂₀ alkyl group, a C₂-C₂₀ alkenyl group, a C₂-C₂₀ alkynyl group , a C₁-C₂₀ heteroalkyl group, a C₆-C₂₀ aryl group, a C₆-C₂₀ arylalkyl group, a C₆-C₂₀ heteroaryl group, a C₇-C₂₀ heteroarylalkyl group, a C₆-C₂₀ heteroaryloxy group, a C₆-C₂₀ heteroaryloxyalkyl group and a C₆-C₂₀ heteroarylalkyl group.

2. The lithium battery of claim 1,
wherein an amount of the unsaturated compound is 0.005 parts by weight to 5 parts by weight per 100 parts by weight of the electrolyte.

3. The lithium battery of claims 1 or 2,
wherein the unsaturated compound is a compound represented by Formula 3 or 4: 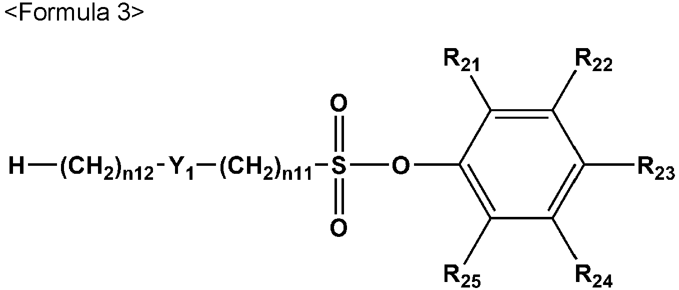 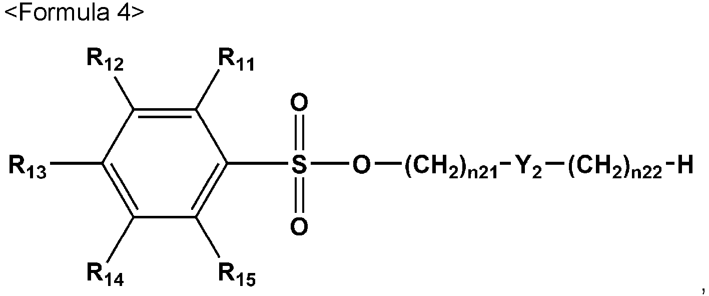
wherein, in Formulae 3 and 4,
n11, n12, n21, and n22 are each independently an integer of 0 to 5,
Y₁ and Y₂ are each independently -CH=CH- or -C=C-, and
R₁₁ to R₁₅ and R₂₁ to R₂₅ are each independently selected from hydrogen, a methyl group, an ethyl group, a propyl group, an isopropyl group, a butyl group, a sec-butyl group, a tert-butyl group, and an isobutyl group.

4. The lithium battery of claim 3,
wherein, in Formulae 3 and 4,
each of n12 and n22 is 0, and
at least one of R₁₁ to R₁₅ and R₂₁ to R₂₅ is selected from a methyl group, an ethyl group, a propyl group, an isopropyl group, a butyl group, a sec-butyl group, a tert-butyl group, and an isobutyl group.

5. The lithium battery of any of claims 1-4,
wherein the unsaturated compound is selected from Compounds 1 to 13:

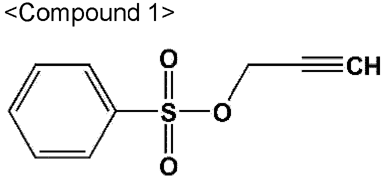

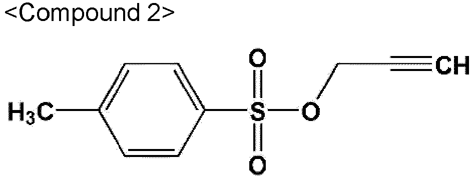

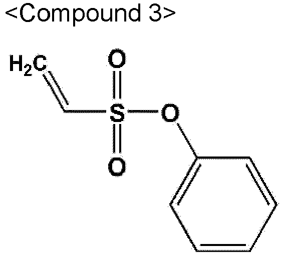

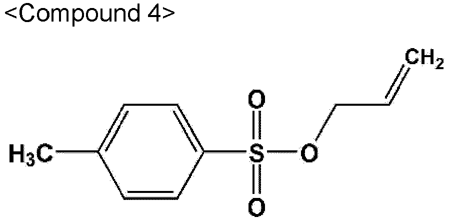

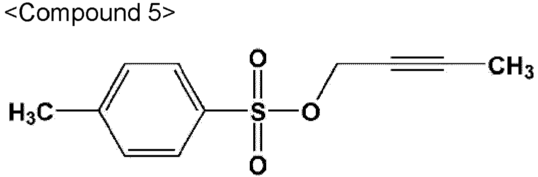

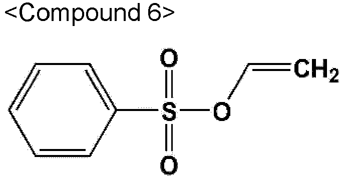

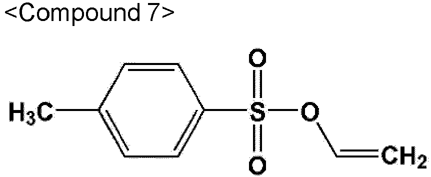

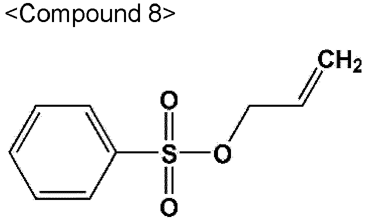

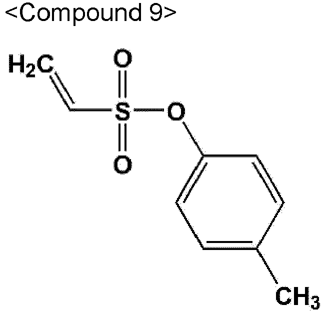

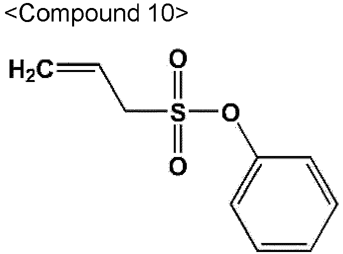

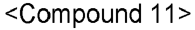

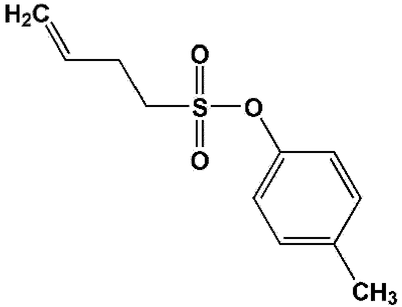

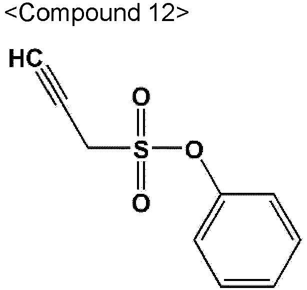

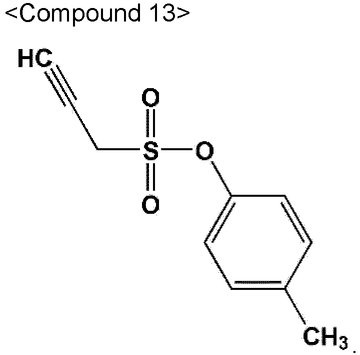

6. The lithium battery of any of claims 1-5,
wherein the lithium salt includes at least one selected from LiPF₆, LiBF₄, LiCF₃SO₃, Li(CF₃SO₂)₂N, LiC₂F₅SO₃, Li(FSO₂)₂N, LiC₄F₉SO₃, LiN(SO₂CF₂CF₃)₂, and compounds represented by Formulae 22 to 25:

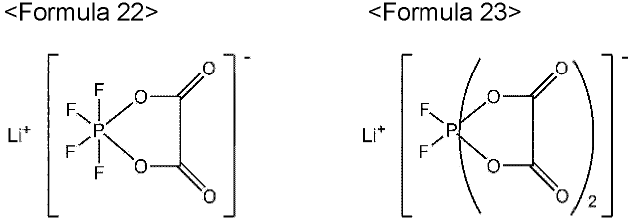

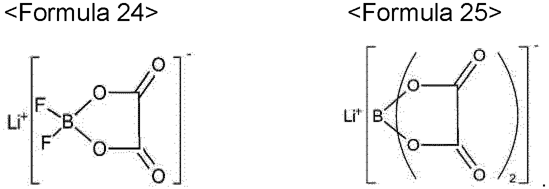

7. The lithium battery of any of claims 1-6,
wherein a concentration of the lithium salt in the electrolyte is 1.0 M to 1.5 M; and/or
wherein the non-aqueous solvent is selected from dimethyl carbonate (DMC), diethyl carbonate (DEC), ethyl methyl carbonate (EMC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), methyl propionate (MP), ethyl propionate (EP), propyl propionate (PP), tetraethylene glycol dimethyl ether (TEGDME ), and a mixture thereof.

8. The lithium battery of any of claims 1-7,
wherein the electrolyte further includes a cyclic carbonate compound, a cyclic acid anhydride compound, a phosphorus (P)-containing compound, a sulfur (S)-containing compound, or a mixture thereof.

9. The lithium battery of claim 8,
wherein the phosphorus-containing compound is at least one selected from a phosphine compound, a phosphate compound, and a phosphite compound, and
the sulfur-containing compound is at least one selected from a sulfone compound, a sulfonate compound, a sultone compound, and a disulfonate compound; and/or
wherein an amount of the cyclic carbonate compound, the cyclic acid anhydride compound, or the mixture thereof is 0.1 parts by weight to 2 parts by weight per 100 parts by weight of the electrolyte; and/or
wherein the cyclic carbonate compound is at least one selected from fluoro-ethylene carbonate (FEC), vinylene carbonate (VC), and vinyl ethylene carbonate (VEC), and the cyclic acid anhydride compound is at least one selected from maleic anhydride and succinic anhydride.

10. The lithium battery of any of claims 1-9,
wherein M, in Formula 1, is at least one element selected from Co, Al, and Mn.

11. The lithium battery of any of claims 1-10,
wherein the cathode active material is represented by Formula 30 or 40:
<Formula 30> Li_{x'}Ni_{y'}Co_{1-y'-z'}Al_{z'}O₂
<Formula 40> Li_{x'}Ni_{y'}Co_{1-y'-z'}Mn_{z'}O₂,
wherein, in Formulae 30 and 40, 0.9≤x'≤1.2, 0.88≤y'≤0.98, 0<z'<0.1, and 0<1-y'-z'<0.2 are satisfied.

12. The lithium battery of any of claims 1-11,
wherein the cathode includes at least one selected from Li_{1.02}Ni_{0.80}Co_{0.15}Mn_{0.05}O₂, Li_{1.02}Ni_{0.85}Co_{0.1}Mn_{0.05}O₂, Li_{1.02}Ni_{0.88}Co_{0.08}Mn_{0.04}O₂, Li_{1.02}Ni_{0.88}Co_{0.10}Mn_{0.02}O₂, Li_{1.02}Ni_{0.91}Co_{0.06}Mn_{0.03}O₂, LiNi_{0.94}CO_{0.04}Mn_{0.02}O₂, Li_{1.02}Ni_{0.80}Co_{0.15}Al_{0.05}O₂, Li_{1.02}Ni_{0.85}Co_{0.1}Al_{0.05}O₂, Li_{1.02}Ni_{0.88}Co_{0.08}Al_{0.04}O₂, Li_{1.02}Ni_{0.88}Co_{0.10}Al_{0.02}O₂, Li_{1.02}Ni_{0.91}Co_{0.06}Al_{0.03}O₂, and LiNi_{0.94}Co_{0.04}Al_{0.02}O₂.

13. The lithium battery of any of claims 1-12,
wherein the anode includes an anode active material, and
the anode active material includes at least one selected from a silicon-based compound, a carbon-based compound, a composite of a silicon-based compound and a carbon-based compound, and a silicon oxide (SiOₓ₁, 0<x1<2);
preferably
wherein the anode active material includes a silicon-based compound or a silicon oxide, and
the silicon-based compound includes silicon particles, and an average particle diameter of the silicon particles is 200 nm or less.

## Patentansprüche

1. Lithiumbatterie, umfassend:
eine Kathode;
eine Anode; und
einen Elektrolyten zwischen der Kathode und der Anode,
wobei die Kathode ein kathodenaktives Material enthält, das durch Formel 1 dargestellt ist, und
der Elektrolyt ein Lithiumsalz, ein nichtwässriges Lösungsmittel und eine ungesättigte Verbindung, die durch Formel 2 dargestellt ist, enthält:
<Formel 1 > LiₓNi_{y}M_{1-y}O_{2-z}A_{z}
wobei in der Formel 1 0,9 ≤ x ≤ 1,2, 0,7 ≤ y ≤ 0,98 und 0 ≤ z < 0,2 erfüllt sind,
M mindestens ein Element ist, das ausgewählt ist aus Al, Mg, Mn, Co, Fe, Cr, V, Ti, Cu, B, Ca, Zn, Zr, Nb, Mo, Sr, Sb, W und Bi, und
A ein Element mit einer Oxidationszahl von -1 oder -2 ist, 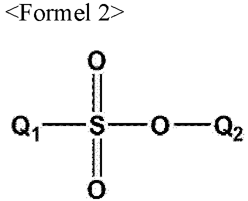
wobei in Formel 2 einer von Q₁ und Q₂ eine durch -(L₁)-(R₁) dargestellte Gruppe ist und der andere von Q₁ und Q₂ eine durch -(L₂)-(R₂) dargestellte Gruppe ist,
L₁ ausgewählt ist aus einer substituierten oder unsubstituierten C₂-C₂₀-Alkenylengruppe und einer substituierten oder unsubstituierten C₂-C₂₀-Alkinylengruppe,
L₂ eine substituierte oder unsubstituierte C₆-C₆₀-Arylengruppe ist und
R₁ and R₂ jeweils unabhängig voneinander ausgewählt sind aus Wasserstoff, einer substituierten oder unsubstituierten linearen oder verzweigten C₁-C₃₀-Alkylgruppe und einer substituierten oder unsubstituierten C₆-C₆₀-Arylgruppe,
wobei der/die Substituent(en) der substituierten C₂-C₂₀-Alkenylengruppe, der substituierten C₂-C₂₀-Alkinylengruppe, der substituierten C₆-C₆₀-Arylengruppe, der substituierten linearen oder verzweigten C₁-C₃₀-Alkylgruppe und der substituierten C₆-C₆₀-Arylgruppe ausgewählt ist/sind aus einem Halogenatom, einer mit einem Halogenatom substituierten C₁-C₂₀-Alkylgruppe, einer C₁-C₂₀-Alkoxygruppe, einer C₂-C₂₀-Alkoxyalkylgruppe, einer Hydroxylgruppe, einer Nitrogruppe, einer Cyano-Gruppe, einer Aminogruppe, einer Amidinogruppe, Hydrazin, Hydrazon, einer Carboxylgruppe oder einem Salz davon, einer Sulfonylgruppe, einer Sulfamoylgruppe, einer Sulfonsäuregruppe oder einem Salz davon, Phosphorsäure oder einem Salz davon, einer C₁-C₂₀-Alkylgruppe, einer C₂-C₂₀-Alkenylgruppe, einer C₂-C₂₀-Alkinylgruppe, einer C₁-C₂₀-Heteroalkylgruppe, einer C₆-C₂₀-Arylgruppe, einer C₆-C₂₀-Arylalkylgruppe, einer C₆-C₂₀-Heteroarylgruppe, einer C₇-C₂₀-Heteroarylalkylgruppe, einer C₆-C₂₀-Heteroaryloxygruppe, einer C₆-C₂₀-Heteroaryloxyalkylgruppe und einer C₆-C₂₀-Heteroarylalkylgruppe.

2. Lithiumbatterie nach Anspruch 1,
wobei die Menge der ungesättigten Verbindung 0,005 Gewichtsteile bis 5 Gewichtsteile pro 100 Gewichtsteile des Elektrolyten beträgt.

3. Lithiumbatterie nach Anspruch 1 oder 2,
wobei die ungesättigte Verbindung eine Verbindung ist, die durch Formel 3 oder 4 dargestellt ist: 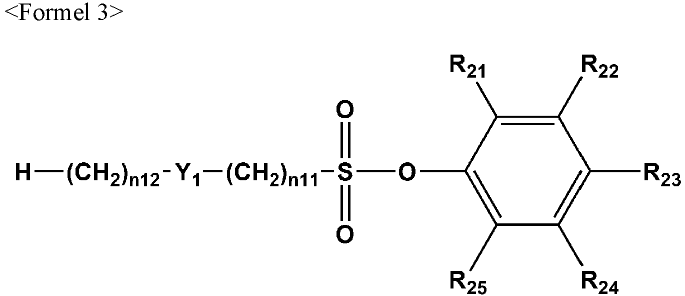 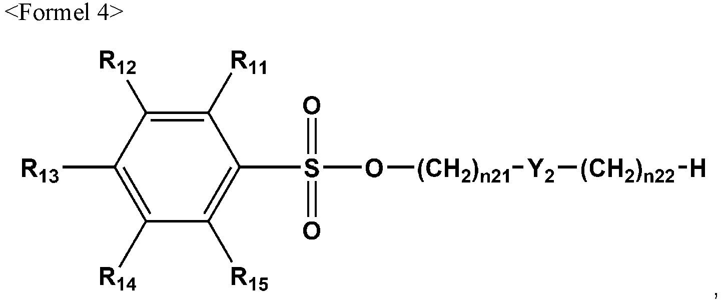
wobei in den Formeln 3 und 4
n11, n12, n21 und n22 jeweils unabhängig eine ganze Zahl von 0 bis 5 sind,
Y₁ und Y₂ jeweils unabhängig voneinander -CH=CH- oder -C≡C- sind und
R₁₁ bis R₁₅ und R₂₁ bis R₂₅ jeweils unabhängig voneinander ausgewählt sind aus Wasserstoff, einer Methylgruppe, einer Ethylgruppe, einer Propylgruppe, einer Isopropylgruppe, einer Butylgruppe, einer sec-Butylgruppe, einer tert-Butylgruppe und einer Isobutylgruppe.

4. Lithiumbatterie nach Anspruch 3,
wobei in den Formeln 3 und 4
n12 und n22 jeweils 0 sind und
mindestens einer von R₁₁ bis R₁₅ und R₂₁ bis R₂₅ ausgewählt ist aus einer Methylgruppe, einer Ethylgruppe, einer Propylgruppe, einer Isopropylgruppe, einer Butylgruppe, einer sec-Butylgruppe, einer tert-Butylgruppe und einer Isobutylgruppe.

5. Lithiumbatterie nach einem der Ansprüche 1 bis 4,
wobei die ungesättigte Verbindung ausgewählt ist aus den Verbindungen 1 bis 13:

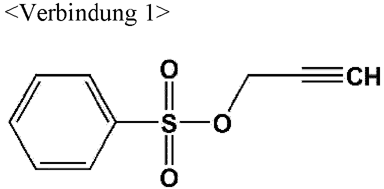

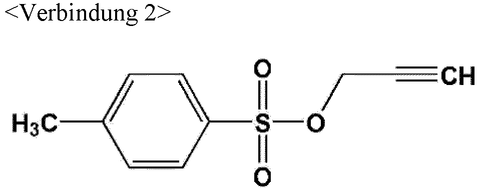

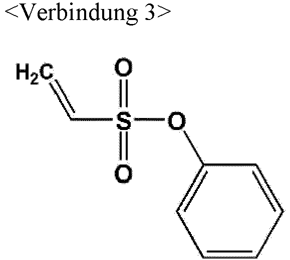

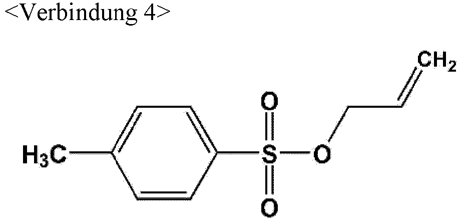

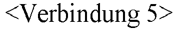

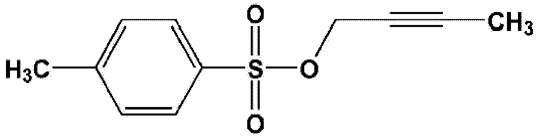

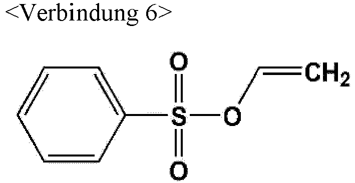

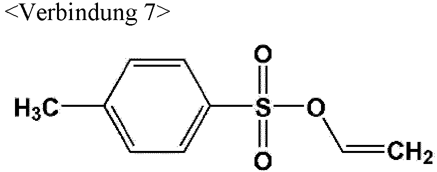

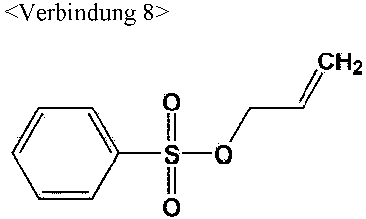

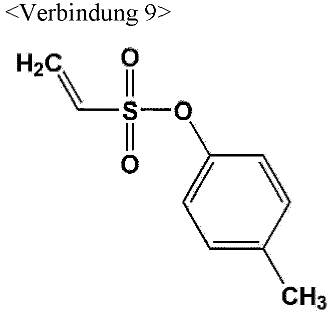

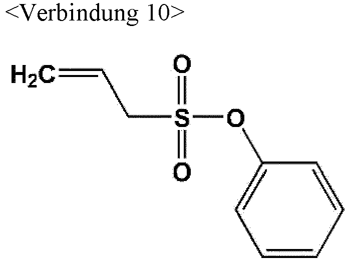

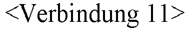

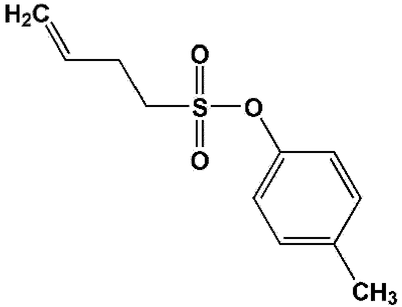

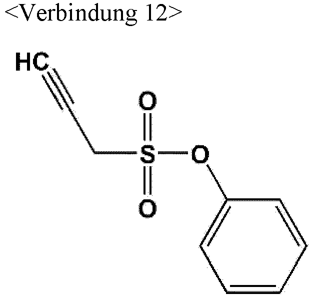

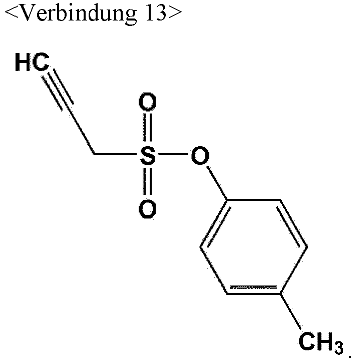

6. Lithiumbatterie nach einem der Ansprüche 1 bis 5,
wobei das Lithiumsalz mindestens eines enthält, das ausgewählt ist aus LiPF₆, LiBF₄, LiCF₃SO₃, Li(CF₃SO₂)₂N, LiC₂F₅SO₃, Li(FSO₂)₂N, LiC₄F₉SO₃, LiN(SO₂CF₂CF₃)₂, und Verbindungen, die durch die Formeln 22 bis 25 dargestellt sind:

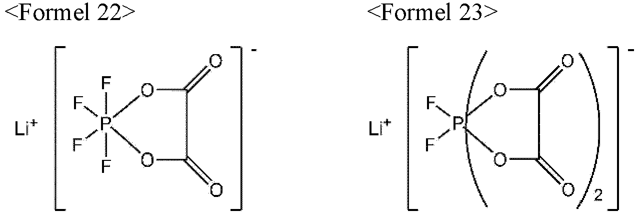

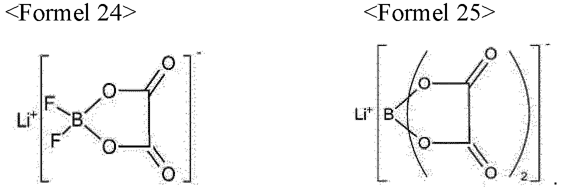

7. Lithiumbatterie nach einem der Ansprüche 1 bis 6,
wobei eine Konzentration des Lithiumsalzes im Elektrolyten 1,0 M bis 1,5 M beträgt; und/oder
wobei das nichtwässrige Lösungsmittel ausgewählt ist aus Dimethylcarbonat (DMC), Diethylcarbonat (DEC), Ethylmethylcarbonat (EMC), Dipropylcarbonat (DPC), Methylpropylcarbonat (MPC), Ethylpropylcarbonat (EPC), Methyethylcarbonat (MEC), Ethylencarbonat (EC), Propylencarbonat (PC), Butylencarbonat (BC), Methylpropionat (MP), Ethylpropionat (EP), Propylpropionat (PP), Tetraethylenglycoldimethylether (TEGDME) und einer Mischung davon.

8. Lithiumbatterie nach einem der Ansprüche 1 bis 7,
wobei der Elektrolyt ferner eine zyklische Carbonatverbindung, eine zyklische Säureanhydridverbindung, eine Phosphor(P)-enthaltende Verbindung, eine Schwefel(S)-enthaltende Verbindung oder eine Mischung davon enthält.

9. Lithiumbatterie nach Anspruch 8,
wobei die Phosphor-enthaltende Verbindung mindestens eine ist, die ausgewählt ist aus einer Phosphinverbindung, einer Phosphatverbindung und einer Phosphitverbindung, und
die Schwefel-enthaltende Verbindung mindestens eine ist, die ausgewählt ist aus einer Sulfonverbindung, einer Sulfonatverbindung, einer Sultonverbindung und einer Disulfonatverbindung; und/oder
wobei eine Menge der zyklischen Carbonatverbindung, der zyklischen Säureanhydridverbindung oder der Mischung davon 0,1 Gewichtsteile bis 2 Gewichtsteile pro 100 Gewichtsteile des Elektrolyten beträgt; und/oder
wobei die zyklische Carbonatverbindung mindestens eine ist, die ausgewählt ist aus Fluorethylencarbonat (FEC), Vinylencarbonat (VC) und Vinylethylencarbonat (VEC), und die zyklische Säureanhydridverbindung mindestens eine ist, die ausgewählt ist aus Maleinsäureanhydrid und Bernsteinsäureanhydrid.

10. Lithiumbatterie nach einem der Ansprüche 1 bis 9,
wobei M in Formel 1 mindestens ein Element ist, das ausgewählt ist aus Co, Al und Mn.

11. Lithiumbatterie nach einem der Ansprüche 1 bis 10,
wobei das kathodenaktive Material durch Formel 30 oder 40 dargestellt ist:
<Formel 30> Li_{x'}Ni_{y'}CO_{1-y'-z'}Al_{z'}O₂
<Formel 40> Li_{x'}Ni_{y'}Co_{1-y-z'}Mn_{z'}O₂,
wobei in den Formeln 30 und 40 0,9 ≤ x' ≤ 1,2, 0,88 ≤ y' ≤ 0,98, 0 < z' < 0,1 und 0 < 1 - y' - z' < 0,2 erfüllt sind.

12. Lithiumbatterie nach einem der Ansprüche 1 bis 11,
wobei die Kathode mindestens eines enthält, das ausgewählt ist aus Li_{1,02}Ni_{0,80}Co_{0,15}Mn_{0,05}O₂, Li_{1,02}Ni_{0,85}Co_{0,1}Mn_{0,05}O₂, Li_{1,02}Ni_{0,88}Co_{0,08}Mn_{0,04}O₂, Li_{1,02}Ni_{0,88}Co_{0,10}Mn_{0,02}O₂, Li_{1,02}Ni_{0,91}Co_{0,06}Mn_{0,03}O₂, LiNi_{0,94}Co_{0,04}Mn_{0,02}O₂, Li_{1,02}Ni_{0,80}Co_{0,15}Al_{0,05}O₂, Li_{1,02}Ni_{0,85}Co_{0,1}Al_{0,05}O₂, Li_{1,02}Ni_{0,88}Co_{0,08}Al_{0,04}O₂, Li_{1,02}Ni_{0,88}Co_{0,10}Al_{0,02}O₂, Li_{1,02}Ni_{0,91}Co_{0,06}Al_{0,03}O₂, and LiNi_{0,94}Co_{0,04}Al_{0,02}O₂.

13. Lithiumbatterie nach einem der Ansprüche 1 bis 12,
wobei die Anode ein anodenaktives Material enthält und
das anodenaktive Material mindestens eines enthält, das ausgewählt ist aus einer siliziumbasierten Verbindung, einer kohlenstoffbasierten Verbindung, einem Verbundstoff aus einer siliziumbasierten Verbindung und einer kohlenstoffbasierten Verbindung und einem Siliziumoxid (SiOₓ₁, 0<x1<2);
vorzugsweise
wobei das anodenaktive Material eine siliziumbasierte Verbindung oder ein Siliziumoxid enthält, und
die siliziumbasierte Verbindung Siliziumpartikel enthält, und ein durchschnittlicher Partikeldurchmesser der Siliziumpartikel 200 nm oder weniger beträgt.

## Revendications

1. Batterie au lithium comprenant :
une cathode ;
une anode ; et
un électrolyte entre la cathode et l'anode,
dans laquelle la cathode comprend un matériau actif de cathode représenté par la formule 1, et
l'électrolyte comprend un sel de lithium, un solvant non aqueux et un composé insaturé représenté par la formule 2 :
<Formule 1 > LiₓNi_{y}M_{1-y}O_{2-z}A_{z}
dans laquelle, dans la formule 1, 0,9≤x≤1,2, 0,7≤y≤0,98 et 0≤z≤0,2 sont satisfaits,
M est au moins un élément choisi parmi Al, Mg, Mn, Co, Fe, Cr, V, Ti, Cu, B, Ca, Zn, Zr, Nb, Mo, Sr, Sb, W et Bi, et
A est un élément comportant un nombre d'oxydation de -1 ou -2, 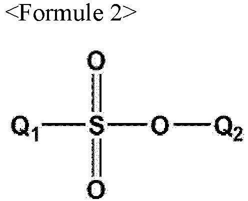
dans laquelle, dans la formule 2, l'un de Q₁ et Q₂ est un groupe représenté par -(L₁)-(R₁), et l'autre de Q₁ et Q₂ est un groupe représenté par -(L₂)-(R₂),
L₁ est choisi parmi un groupe alcénylène en C₂ à C₂₀ substitué ou non substitué et un groupe alcynylène en C₂ à C₂₀ substitué ou non substitué,
L₂ est un groupe arylène C₆ à C₆₀ substitué ou non substitué, et
R₁ et R₂ sont chacun indépendamment choisis parmi l'hydrogène, un groupe alkyle en C₁ à C₃₀ linéaire ou ramifié substitué ou non substitué et un groupe aryle en C₆ à C₆₀ substitué ou non substitué ;
dans laquelle le ou les substituants du groupe alcénylène en C₂ à C₂₀ substitué, du groupe alcynylène en C₂ à C₂₀ substitué, du groupe arylène en C₆ à C₆₀ substitué, du groupe alkyle en C₁ à C₃₀ linéaire ou ramifié substitué et du groupe aryle en C₆ à C₆₀ substitué sont choisis parmi un atome d'halogène, un groupe alkyle en C₁ à C₂₀ substitué par un atome d'halogène, un groupe alcoxy en C₁ à C₂₀, un groupe alcoxyalkyle en C₂ à C₂₀, un groupe hydroxyle, un groupe nitro, un groupe cyano, un groupe amino, un groupe amidino, l'hydrazine, l'hydrazone, un groupe carboxyle ou un sel de celui-ci, un groupe sulfonyle, un groupe sulfamoyle, un groupe acide sulfonique ou un sel de celui-ci, l'acide phosphorique ou un sel de celui-ci, un groupe alkyle en C₁ à C₂₀, un groupe alcényle en C₂ à C₂₀, un groupe alcynyle en C₂ à C₂₀, un groupe hétéroalkyle en C₁ à C₂₀, un groupe aryle en C₆ à C₂₀, un groupe arylalkyle en C₆ à C₂₀, un groupe hétéroaryle en C₆ à C₂₀, un groupe hétéroarylalkyle en C₇ à C₂₀, un groupe hétéroaryloxy en C₆ à C₂₀, un groupe hétéroaryloxyalkyle en C₆ à C₂₀ et un groupe hétéroarylalkyle en C₆ à C₂₀.

2. Batterie au lithium selon la revendication 1,
dans laquelle une quantité du composé insaturé est de 0,005 partie en poids à 5 parties en poids pour 100 parties en poids de l'électrolyte.

3. Batterie au lithium selon la revendication 1 ou 2,
dans laquelle le composé insaturé est un composé représenté par la formule 3 ou 4 : 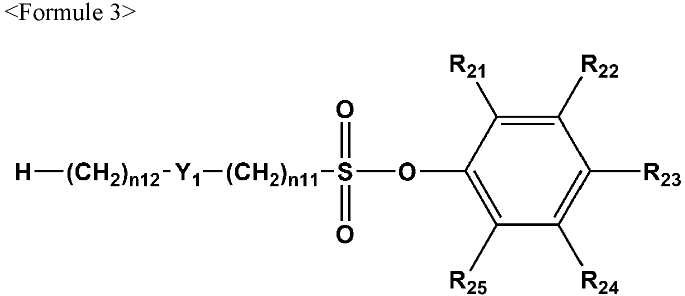 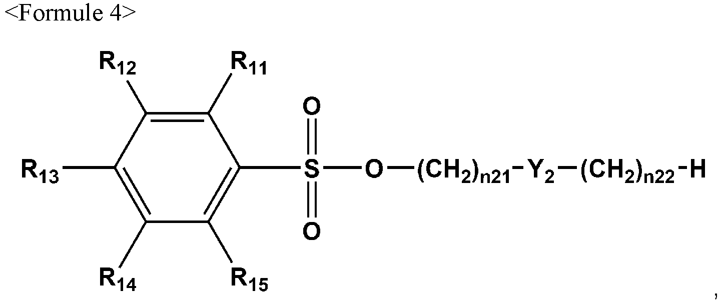
dans laquelle, dans les formules 3 et 4,
n11, n12, n21 et n22 sont chacun indépendamment un entier de 0 à 5,
Y₁ et Y₂ sont chacun indépendamment -CH=CH- ou -C≡C-, et
R₁₁ à R₁₅ et R₂₁ à R₂₅ sont chacun indépendamment sélectionnés parmi l'hydrogène, un groupe méthyle, un groupe éthyle, un groupe propyle, un groupe isopropyle, un groupe butyle, un groupe sec-butyle, un groupe tert-butyle et un groupe isobutyle.

4. Batterie au lithium selon la revendication 3,
dans laquelle dans les formules 3 et 4,
chacun de n12 et n22 est 0, et
au moins l'un de R₁₁ à R₁₅ et R₂₁ à R₂₅ est choisi parmi un groupe méthyle, un groupe éthyle, un groupe propyle, un groupe isopropyle, un groupe butyle, un groupe sec-butyle, un groupe tert-butyle et un groupe isobutyle.

5. Batterie au lithium selon l'une quelconque des revendications 1 à 4,
dans laquelle le composé insaturé est choisi parmi les composés 1 à 13 :

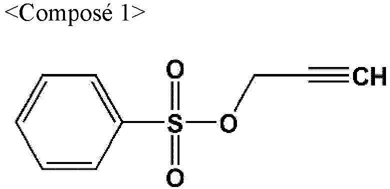

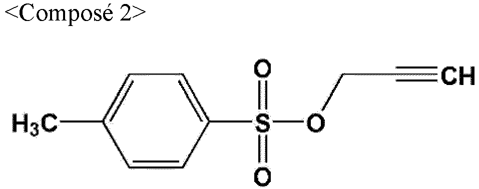

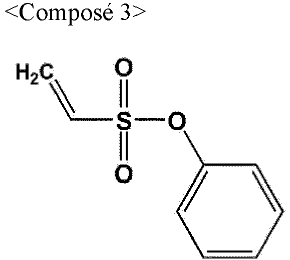

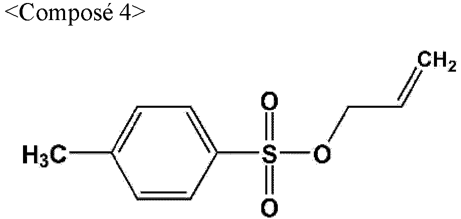

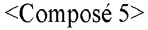

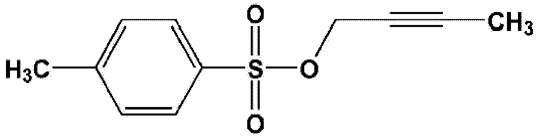

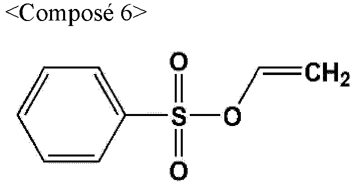

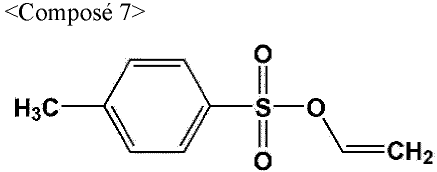

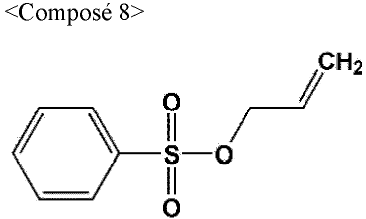

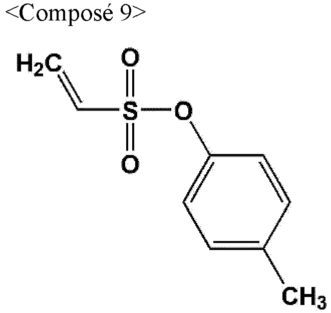

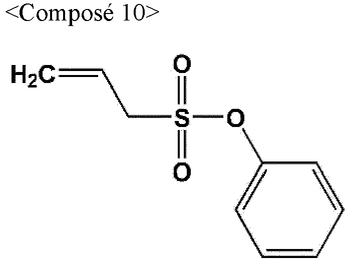

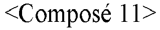

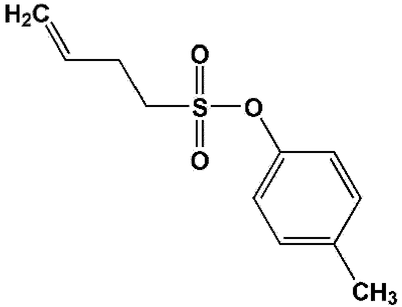

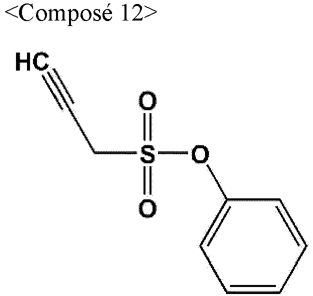

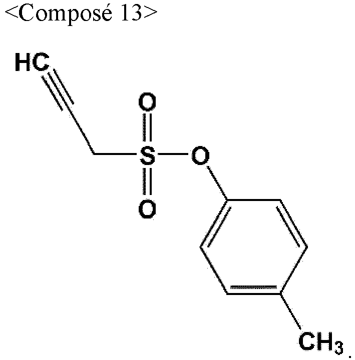

6. Batterie au lithium selon l'une quelconque des revendications 1 à 5,
dans laquelle le sel de lithium comprend au moins un élément choisi parmi LiPF₆, LiBF₄, LiCF₃SO₃, Li(CF₃SO₂)₂N, LiC₂F₅SO₃, Li(FSO₂)₂N, LiC₄F₉SO₃, LiN(SO₂CF₂CF₃)₂, et des composés représentés par les formules 22 à 25 :

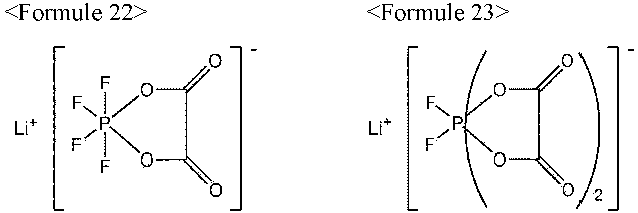

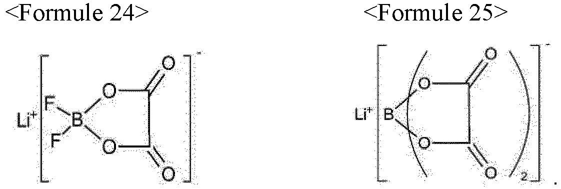

7. Batterie au lithium selon la revendication 1 à 6,
dans laquelle une concentration du sel de lithium dans l'électrolyte est de 1,0 M à 1,5 M ; et/ou
dans laquelle le solvant non aqueux est choisi parmi le carbonate de diméthyle (DMC), le carbonate de diéthyle (DEC), le carbonate d'éthyle et de méthyle (EMC), le carbonate de dipropyle (DPC), le carbonate de méthyle et de propyle (MPC), le carbonate d'éthyle et de propyle (EPC), le carbonate de méthyle et d'éthyle (MEC), le carbonate d'éthylène (EC), le carbonate de propylène (PC), le carbonate de butylène (BC), le propionate de méthyle (MP), le propionate d'éthyle (EP), le propionate de propyle (PP), l'éther diméthylique de tétraéthylène glycol (TEGDME) et un mélange de ceux-ci.

8. Batterie au lithium selon l'une quelconque des revendications 1 à 7,
dans laquelle l'électrolyte comprend en outre un composé carbonate cyclique, un composé anhydride d'acide cyclique, un composé contenant du phosphore (P), un composé contenant du soufre (S) ou un mélange de ceux-ci.

9. Batterie au lithium selon la revendication 8,
dans laquelle le composé contenant du phosphore est au moins un composé choisi parmi un composé de phosphine, un composé de phosphate et un composé de phosphite, et
le composé contenant du soufre est au moins un composé choisi parmi un composé sulfone, un composé sulfonate, un composé sultone et un composé disulfonate ; et/ou
dans laquelle une quantité du composé carbonate cyclique, du composé anhydride d'acide cyclique ou du mélange de ceux-ci est de 0,1 partie en poids à 2 parties en poids pour 100 parties en poids de l'électrolyte ; et/ou
dans laquelle le composé carbonate cyclique est au moins l'un choisi parmi le carbonate de fluoroéthylène (FEC), le carbonate de vinylène (VC) et le carbonate de vinyle éthylène (VEC), et le composé anhydride d'acide cyclique est au moins l'un choisi parmi l'anhydride maléique et l'anhydride succinique.

10. Batterie au lithium selon l'une quelconque des revendications 1 à 9,
dans laquelle M, dans la formule 1, est au moins un élément choisi parmi Co, Al et Mn.

11. Batterie au lithium selon l'une quelconque des revendications 1 à 10,
dans laquelle le matériau actif de cathode est représenté par la formule 30 ou 40 :
<Formule 30> Li_{x'}Ni_{y'}CO_{1-y'-z'}Al_{z'}O₂
<Formule 40> Li_{X'}Ni_{y'}Co_{1-y'-z'}Mn_{z'}O₂,
dans laquelle, dans les formules 30 et 40, 0,9≤x'≤1,2, 0,88≤y'≤0,98, 0<z'<0,1 et 0<1-y'-z'<0,2 sont satisfaites.

12. Batterie au lithium selon l'une quelconque des revendications 1 à 11,
dans laquelle la cathode comprend au moins un élément choisi parmi Li_{1,02}Ni_{0,80}Co_{0,15}Mn_{0,05}O₂, Li_{1,02}Ni_{0,85}Co_{0,1}Mn_{0,05}O₂, Li_{1,02}N1_{0,88}Co_{0,08}Mn_{0,04}O₂, Li_{1,02}Ni_{0,88}Co_{0,10}Mn_{0,02}O₂, Li_{1,02}Ni_{0,91}Co_{0,06}Mn_{0,03}O₂, LiNi_{0,94}Co_{0,04}Mn_{0,02}O₂, Li_{1,02}Ni_{0,80}Co_{0,15}Al_{0,05}O₂, Li_{1,02}Ni_{0,85}Co_{0,1}Al_{0,05}O₂, Li_{1,02}Ni_{0,88}Co_{0,08}Al_{0,04}O₂, Li_{1,02}Ni_{0,88}Co_{0,10}Al_{0,02}O₂, Li_{1,02}Ni_{0,91}Co_{0,06}Al_{0,03}O₂, et LiNi_{0,94}Co_{0,04}Al_{0,02}O₂.

13. Batterie au lithium selon l'une quelconque des revendications 1 à 12,
dans laquelle l'anode comprend un matériau actif d'anode, et
le matériau actif d'anode comprend au moins l'un choisi parmi un composé à base de silicium, un composé à base de carbone, un composite d'un composé à base de silicium et d'un composé à base de carbone, et un oxyde de silicium (SiOₓ₁, 0<x1<2) ;
de préférence
dans laquelle le matériau actif d'anode comprend un composé à base de silicium ou un oxyde de silicium, et
le composé à base de silicium comprend des particules de silicium, et un diamètre moyen de particule des particules de silicium est de 200 nm ou moins.
